# EUROPÄISCHE PATENTSCHRIFT

(11) **EP 1 912 542 B1**
(45) Veröffentlichungstag und Bekanntmachung des Hinweises auf die Patenterteilung: **11.02.2009**
(21) Anmeldenummer: 06778147.6
(22) Anmeldetag: 03.08.2006
(51) Int. Cl.: A47J 31/40

(54) **VORRICHTUNG ZUM EXTRAHIEREN EINES IN EINER KAPSEL ENTHALTENEN EXTRAKTIONSGUTES MIT EINEM FLÜSSIGEN EXTRAKTIONSMITTEL**
APPARATUS FOR EXTRACTING AN EXTRACTION SUBSTANCE, WHICH IS CONTAINED IN A CAPSULE, WITH A LIQUID EXTRACTION MEANS
DISPOSITIF POUR EXTRAIRE UN PRODUIT D'EXTRACTION CONTENU DANS UNE CAPSULE, AVEC UN AGENT D'EXTRACTION LIQUIDE

(30) Priorität: 05.08.2005 WO PCT/EP2005/053878
(43) Veröffentlichungstag der Anmeldung: 23.04.2008
(73) Patentinhaber: Delica AG, 4127 Birsfelden (CH)
(72) Erfinder: BRÜGGER, Walter, 5454 Bellikon (CH); DEUBER, Louis, 8805 Richterswil (CH)
(74) Vertreter: Wenger, René
(86) Internationale Anmeldenummer: PCT/EP2006/065015
(87) Internationale Veröffentlichungsnummer: WO 2007/017455

(56) Entgegenhaltungen:
- EP-A- 1 219 217
- EP-A- 1 417 914
- WO-A-03/101265
- WO-A-20/06005755
- US-A- 6 079 315

## Beschreibung

Die Erfindung betrifft eine Vorrichtung zum Extrahieren eines in einer Kapsel enthaltenen Extraktionsgutes mit einem flüssigen Extraktionsmittel gemäss dem Oberbegriff von Anspruch 1. Derartige Vorrichtungen haben sich vor allem für die Zubereitung von Getränken wie z. B. Kaffee, Tee oder Kakao durchgesetzt, wobei die Trockensubstanz jeweils als Einzelportion in einer Kapsel eingeschlossen ist.

Durch die WO 2005/004683 ist eine Vorrichtung bekannt geworden, bei welcher die Kapsel in eine Zwischenposition zwischen dem Kapselhalter und dem Verschlussteil eingeführt und dort fixiert wird. Anschliessend wird die Extraktionskammer geschlossen, und der Extraktionsvorgang kann beginnen. Beim Wiederöffnen der Extraktionskammer fällt die Kapsel ebenfalls unter Schwerkrafteinwirkung nach unten. Ein Problem bei dieser Vorrichtung besteht darin, dass die Mittel zum Halten der Kapsel in der Zwischenposition weder das Schliessen der Extraktskammer noch das spätere Herausfallen der Kapsel behindern dürfen. Abgesehen davon ist bei unsorgfältiger Handhabung nicht immer gewährleistet, dass die Kapsel präzise in der Zwischenposition gehalten ist. Die Kapsel muss nämlich von der aufrechten Lage, in der sie verpackt ist, um 90° in eine horizontale Lage gedreht werden.

Die US 6,079,315 beschreibt eine gattungsmässig vergleichbare Vorrichtung mit gegeneinander pressbaren Teilen zum Bilden einer Extraktionskammer. Für den Auswurfvorgang kann das untere Teil, welches einen Kapselhalter bildet, derart ausgeschwenkt werden, dass die Kapsel herunterfällt. Der Kapselhalter ist mit Hilfe einer Art Schubladen in horizontaler Richtung zum Beladen mit der Kapsel aus einem Gestell herausziehbar. Diese Vorrichtung ist verhältnismässig schwierig in der Handhabung. Weiterhin hat sich gezeigt, dass die Anordnung, bei der die Kapsel sowohl zum Laden als auch zum Brühen in der Schliessstellung in einer vertikalen Lage verbleibt, insbesondere hinsichtlich Kompaktheit nachteilig sein kann.

Es ist daher eine Aufgabe der Erfindung, eine Vorrichtung der eingangs genannten Art zu schaffen, deren Funktionalität und Handhabung erleichtert wird. Die Kapsel soll dabei weitgehend in der gleichen Lage in die Vorrichtung eingegeben werden können, wie sie der Packung entnommen wird, und das provisorische Festhalten der Kapsel in einer Zwischenposition vor dem Schliessen der Extraktionskammer soll ganz entfallen. Ausserdem soll ein kompaktes Modul geschaffen werden, das in unterschiedlichen Geräten und weitgehend lageunabhängig eingebaut werden kann. Diese Aufgabe wird erfindungsgemäss mit einer Vorrichtung gelöst, welche die Merkmale im Anspruch 1 aufweist.

Die schwenkbare Anordnung des Kapselhalters erlaubt es, den Schliessvorgang praktisch in jeder beliebigen Lage durchzuführen. Die Aufnahmestellung kann dabei immer so gewählt werden, dass die Kapsel etwa vertikal von oben nach unten in die Kavität des Kapselhalters eingelegt werden kann, also in der gleichen Postition, wie die Kapsel der Packung entnommen wird. Ein Festhalten in einer Zwischenposition erübrigt sich, weil die Kapsel bereits in einer Lage in den Kapselhalter eingeführt ist, die sie auch später beim Extraktionsvorgang einnimmt. Durch das Schwenken in die Auswurfstellung unter einem Winkel von vorzugsweise mehr als 90° nach dem Wiederöffnen der Extraktionskammer ist gewährleistet, dass die Kapsel ohne Hilfsmittel lediglich durch ihr Eigengewicht nach unten fällt. Vorzugsweise führt der Kapselhalter eine gesamte Schwenkbewegung von gegen 180° aus.

Die relative Schliessbewegung zwischen Kapselhalter und Verschlussteil könnte je nach Anwendungszweck auf unterschiedliche Weise realisiert werden. Die erfindungsgemässe Vorrichtung zeichnet sich aber dadurch aus, dass der Kapselhalter nur schwenkbar und das Verschlussteil nur entlang einer Längsachse verschiebbar gelagert ist und dass das Verschlussteil zwischen der Aufnahmestellung und der Schliessstellung gegen den Kapselhalter in Schliessrichtung und zwischen der Schliessstellung und der Auswurfstellung vom Kapselhalter weg in einer zur Schliessrichtung entgegengesetzten Öffnungsrichtung insbesondere linear verschiebbar ist. Diese Lösung hat den Vorteil, dass der Kapselhalter lediglich über ein entsprechendes Getriebe gedreht werden muss und dass keine zusätzlichen Mittel erforderlich sind, um ihn auch noch zu verschieben.

Die Relativverschiebung zwischen Verschlussteil und Kapselhalter erfolgt vorteilhaft auf einer linearen Vorschubbahn. Es wäre aber je nach Anwendungsfall ohne weiteres möglich, dass dabei eine Kurvenbahn zurückgelegt wird.

Der Schwenkwinkel zwischen der Aufnahmestellung und der Schliessstellung beträgt vorteilhaft mehr als 60°, vorzugsweise zwischen 60° und 90°. Auf diese Weise ist gewährleistet, dass der Einführbereich für die Kapsel über der Kavität völlig frei liegt. Anderseits beträgt der Schwenkwinkel zwischen der Schliessstellung und der Auswurfstellung mehr als 20°, vorzugsweise zwischen 20° und 60°. Ein ausreichender Winkel ist hier ebenfalls erforderlich, damit die Kapsel frei nach unten fallen kann.

Die Kavität im Kapselhalter kann sich vorteilhaft über eine Achse erstrecken, die in der Schliessstellung zur Horizontalen um einen Winkel von 0° bis 30° geneigt ist. Diese Achse fällt dabei mit der Verschiebeachse (bzw. Längsachse) zwischen Verschlussteil und Kapselhalter zusammen, so dass die Kapsel nicht horizontal, sondern in einer Schräglage extrahiert wird sowie optimal eingelegt werden kann. Auch eine horizontale Anordnung der Achsen ist jedoch möglich.

Kapselhalter und Verschlussteil sind vorteilhaft in einem Support gelagert, wobei die Schliessbewegung und die Öffnungsbewegung zwischen den beiden Teilen bzw. die Schwenkbewegung des Kapselhalters über einen am Support angeordneten Betätigungshebel ausführbar sind. Der Betätigungshebel ist dabei vorteilhaft als Schwenkhebel ausgebildet. Anstelle des Betätigungshebels könnte natürlich auch ein motorischer Antrieb treten.

Der Betätigungshebel kann dabei vorteilhaft ein Schwenkhebel sein, der vorteilhaft am Support angelenkt ist, wobei er über eine Koppelanordnung mit vorzugsweise wenigstens einer Koppel in Wirkverbindung steht mit einem geführten Schlitten, an dem das Verschlussteil angeordnet ist. So kann auf einfache Weise die Schwenkbewegung in eine Linearbewegung umgewandelt werden.

Für das zuverlässige Anfahren der Aufnahmestellung kann der Kapselhalter zusätzlich mittels eines Federelements in die Aufnahmestellung vorgespannt sein. So erzeugt das Federelement insbesondere in der Auswurfstellung eine Rückstellkraft auf den Kapselhalter, wodurch sich eine vorteilhafte Rückführbewegung in die Aufnahmestellung ergibt.

Das Federelement zum Vorspannen des Kapselhalters in die Aufnahmestellung kann eine Schenkelfeder sein. Eine derartige Feder lässt sich Platz sparend auf einer Achse anbringen und verfügt über eine ausreichende Spannkraft. Die Schenkelfeder ist dabei bevorzugt auf einer Seite am Kapselhalter und auf der andern Seite am Support befestigt. Selbstverständlich ist es aber auch denkbar, andere biegebeanspruchte Federtypen (z.B. Spiralfedern) vorzusehen.

Vorteilhaft kann es sein, wenn ein Dämpfungselement zur Dämpfung der Rückführ- bzw. Rückstellbewegung des Kapselhalters in Folge der Vorspannung des Federelements vorgesehen ist. Das Dämpfungselement kann in einer Lagerung des Kapselhalters im Support angeordnet sein. Die Bewegung des Kapselhalters von der Auswurfstellung in Gegendrehrichtung kann durch ein am Support vorgesehenes Anschlagmittel zum Festlegen der Aufnahmestellung abrupt gestoppt werden. Der Einsatz von Dämpfungselementen hat den Vorteil, dass eine übermässige Schlagbeanspruchung des Kapselhalters beim Stoppvorgang verhindert wird. Solche Dämpfungselemente zum Abbremsen von Drehbewegungen sind handelsübliche Bauteile und dem Fachmann bekannt und geläufig.

Am Verschlussteil, insbesondere am Schlitten des Verschlussteils, kann ein Schubelement angeordnet sein, das bei einer Verschiebung des Verschlussteils in Schliessrichtung derart mit einem am Kapselhalter angeordneten ersten Anschlagelement zusammenwirkt, dass der Kapselhalter von der Aufnahmestellung in die Schliessstellung schwenkbar ist. Besonders bevorzugt ist das Schubelement als Stössel ausgebildet. Mit einem Stössel kann auf besonders einfache Art und Weise ein exzentrisch am Kapselhalter angeordnetes Anschlagelement angestossen werden, wodurch die Schwenkbewegung des Kapselhalters in Drehrichtung hervorgerufen wird. Ein Stössel kann beispielsweise ein am Schlitten angeformtes Teil sein oder als separates Bauteil ausgebildet sein.

Das Schubelement und das erste Anschlagelement können derart ausgebildet sein, dass nach Erreichen der Schliessstellung des Kapselhalters bei fortgesetzter Verschiebung des Verschlussteils in Schliessrichtung insbesondere bis zum Erreichen einer Brühstellung das erste Anschlagelement von der schiebenden Beaufschlagung durch das Schubelement befreit oder befreibar ist. Der Schliessvorgang zur Bildung der Extraktionskammer erfolgt demnach nicht simultan: nach Erreichen der Schliessstellung des Kapselhalters hat das Verschlussteil seine Endstellung (Schliessstellung) noch nicht erreicht, sondern muss weiter in Schliessrichtung verschoben werden. Bei diesem Bewegungsvorgang sind die Achse der Kavität und die Verschiebeachse bzw. die Längsachse des Verschlussteils vorteilhaft kongruent. Das Schubelement ist dabei vorteilhaft derart ausgestaltet, dass nach Erreichen der Schliessstellung des Kapselhalters der Kapselhalter bei fortgesetzter Verschiebung des Verschlussteils in Schliessrichtung in der Schliessstellung gehalten ist.

Dies kann vorteilhaft dadurch erreicht werden, dass das Schubelement einen in Schliessrichtung bzw. in der Längsachse (des Verschlussteils) sich erstreckenden Gleitabschnitt aufweist, der eine Gleitfläche für das erste Anschlagelement bei der fortgesetzten Verschiebung des Verschlussteils in Schliessrichtung bildet. Demzufolge kann also das Schubelement einen mit dem Anschlagelement zusammenwirkenden Anstossabschnitt für die erste Verschiebung des Verschlussteils und den genannten Gleitabschnitt für die weitere Verschiebung des Verschlussteils in Schliessrichtung aufweisen.

Vorteilhaft kann es weiter sein, wenn am Verschlussteil, insbesondere am Schlitten, ein Positionierteil zum Fixieren der Schliessstellung des Kapselhalters bei der fortgesetzten Verschiebung des Verschlussteils in Schliessrichtung angeordnet ist, das einen Anschlag für eine am Kapselhalter angeordnete Positioniernase bildet. Auf diese Weise kann sichergestellt werden, dass der Kapselhalter bei der fortgesetzten Verschiebung des Verschlussteils weder in Drehrichtung noch in Gegendrehrichtung schwenkbar ist.

Das Schubelement und/oder das Positionierteil können beispielsweise auf derselben Seite des Schlittens angeordnet sein, wodurch die korrespondierenden Anschlagelemente, d. h. das erste Anschlagelement und das Positionierteil, ebenfalls auf einer gleichen Stirnseite des Kapselhalters angebracht wären. Weiterhin könnte es vorteilhaft sein, dass das Schubelement und/oder das Positionierteil Führungsmittel, beispielsweise Längsschienen, aufweisen, die in einer Führungsnut oder in einem Führungskanal in Schliessrichtung verschiebbar gelagert sind. Auf diese Weise kann eine besonders robuste Konstruktion geschaffen werden.

Zum Festlegen der Aufnahmestellung und der Schliessstellung des Kapselhalters können am Support Anschlagmittel vorgesehen sein. Diese dem Support zugeordneten Anschlagmittel können mit Anschlagmitteln des Kapselhalters zusammenwirken. Auf diese Weise kann der Schwenkwinkel des Kapselhalters ohne Einwirkung durch das Verschlussteil begrenzt werden.

Am Verschlussteil, insbesondere am Schlitten, kann ein Rückführmittel angeordnet sein, das bei einer Verschiebung des Verschlussteils in Öffnungsrichtung derart mit einem am Kapselhalter angeordneten zweiten Anschlagelement zusammenwirkt, dass der Kapselhalter von der Schliessstellung in die Auswurfstellung in Drehrichtung schwenkbar ist. Das Rückführmittel kann dabei bevorzugt ein Zugglied sein, das das zweite Anschlagelement mitziehen kann. Selbstverständlich wäre es aber auch denkbar, dass das Rückführmittel ein Stossglied sein könnte. Das Rückführmittel kann eine Auflaufflanke aufweisen, die zum Schwenken des Kapselhalters von der Schliessstellung in die Auswurfstellung einen Anschlag für das zweite Anschlagelement bildet. Eine solche Auflaufflanke könnte beispielsweise durch eine Hinterschneidung oder Verjüngung des Zugglieds geschaffen werden. Auf diese Weise ist ein vorteilhafter Eingriff zwischen dem Rückführmittel und dem zweiten Anschlagelement gegeben.

Das Rückführmittel und das zweite Anschlagelement können derart ausgebildet sein, dass nach Erreichen der Auswurfstellung des Kapselhalters bei einer fortgesetzten Verschiebung des Verschlussteils in Öffnungsrichtung das zweite Anschlagelement von der (beispielsweise mitziehenden) Beaufschlagung durch das Rückführmittel freigegeben werden kann, wodurch der Kapselhalter von der Auswurfstellung in die Aufnahmestellung in die Gegendrehrichtung schwenkbar ist. Eine solche Anordnung ist insbesondere dann vorteilhaft, wenn der Kapselhalter mittels des vorgängig genannten Federelements in der Aufnahmestellung vorgespannt ist. Denn durch die Rückstellkraft des Federelements kann nach Freigabe der Kapselhalter automatisch in die Aufnahmestellung zurückgeschwenkt werden.

Vorteilhaft kann es sein, wenn das Rückführmittel eine der Auflaufflanke vorgelagerte Positionierflanke zum Fixieren der Schliessstellung des Kapselhalters bei einer ersten Verschiebung des Verschlussteils in Öffnungsrichtung vor Beginn der Schwenkbewegung zum Erreichen der Auswurfstellung aufweist. Diese Positionierflanke kann für diese erste Verschiebung einen Anschlag für das zweite Anschlagelement bilden.

Vorteilhaft kann es sein, wenn das zweite Anschlagelement auf einer Stirnseite des Kapselhalters angeordnet ist, die der mit dem ersten Anschlagelement und/oder mit der Positioniernase versehenen Stirnseite gegenüberliegt. Vorteilhaft kann es demnach sein, wenn einerseits das Schubelement und/oder das Positionierteil und anderseits das Rückführmittel jeweils auf einer Seite des Schlittens angeordnet sind.

In einer Ausführungsform kann das Rückführmittel schwenkbar am Verschlussteil, insbesondere am Schlitten gelagert sein, wodurch das Rückführmittel über ein Eingriffsglied zum Abfahren einer Kurvensteuerung steuerbar ist. Das Eingriffsglied kann somit besonders einfach in einer Steuerbahn in der Kurvensteuerung geführt sein, welche den Neigungswinkel des Rückführmittels relativ zum Kapselhalter steuert.

Die Schwenkbewegung des Kapselhalters selbst kann auf unterschiedliche Weise ausgeführt werden. Da der Kapselhalter für den eigentlichen Schliessvorgang keine Drehbewegung mehr ausführen darf, und da er beim Reversieren des Betätigungshebels sich noch weiter drehen muss, verläuft die Bewegung des Schwenkhebels und des Kapselhalters nicht gleichsinnig bzw. nicht simultan. Für die Ausführung derartiger Bewegungen eignen sich verschiedene Getriebetypen mit ungleichförmigen Bewegungen wie z. B. Sperrgetriebe (Malteserkreuzgetriebe) oder Kurvengetriebe. Besonders vorteilhaft wird denn auch die Schwenkbewegung des Kapselhalters über eine zwischen Support und Kapselhalter wirkende Kurvensteuerung gesteuert. Insbesondere können die Schwenkbewegungen des Kapselhalters von der Schliessstellung zur Auswurfstellung und zurück in die Aufnahmestellung über die Kurvensteuerung steuerbar sein.

Vorteilhaft kann es sein, wenn eine Kurvensteuerung für das Rückführmittel vorgesehen ist, die durch eine geschlossene Steuerbahn gebildet ist. Dabei kann die Steuerbahn einen in Längsrichtung verlaufenden unteren und einen oberen Längsbahnabschnitt und diese Längsbahnabschnitte verbindende Querbahnabschnitte aufweisen, wobei der Kapselhalter nur bei Abfahren des unteren Längsbahnabschnitts durch das Rückführmittel beaufschlagbar ist und wobei bei Erreichen des an den unteren Längsbahnabschnitt anschliessenden Querbahnabschnitts das zweite Anschlagelement von der Beaufschlagung durch das Rückführmittel freigegeben wird, wodurch der Kapselhalter von der Auswurfstellung in die Gegendrehrichtung in die Aufnahmestellung schwenkbar ist.

Das Rückführmittel kann schwenkbar am Verschlussteil, insbesondere am Schlitten gelagert und mittels einer Federanordnung in Richtung des oberen Längsbahnabschnitts vorgespannt sein. Dadurch kann das Rückführmittel vorzugsweise selbstständig unter Einwirkung einer Federkraft der Federanordnung in den oberen Längsbahnabschnitt übergeführt werden. Auf diese Weise ist weiterhin sichergestellt, dass die Kurvenbahn nur in einer Richtung abfahrbär (bzw. abgreifbar) ist.

Alternativ kann ein Abfahren einer Steuerbahn in nur einer Richtung auch dadurch erreicht werden, dass die Kurvensteuerung eine geschlossene Steuerbahn mit wenigstens zwei Bahnabschnitten aufweist, wobei mittels einer Steuerweiche beim Schliessen und beim Öffnen der Extraktionskammer unterschiedliche Bahnabschnitte abgreifbar sind. Mit einer derartigen Steuerbahn ist es auf einfache Weise möglich, die Schliessbewegung und die Öffnungsbewegung sehr präzise in eine Schwenkbewegung am Kapselhalter umzuwandeln. Die Weiche wird dabei beim Schliessen der Extraktionskammer überfahren, so dass beim Öffnen der Extraktionskammer eine andere Steuerkurve abgetastet wird als beim Schliessen, bis zuletzt wieder die gleiche Ausgangsposition erreicht wird.

Das Verschlussteil ist vorteilhaft als Injektor ausgebildet, mit dem die Kapsel in der Schliessstellung penetrierbar und Extraktionsmittel in die Kapsel einführbar ist. Dabei kann am Boden der Kavität eine Filterplatte angeordnet sein, mit der die Kapsel in der Schliessstellung penetrierbar ist, wobei unter der Filterplatte eine Ableitung zum Ableiten des Extrakts im Kapselhalter angeordnet ist. Eine derartige Extraktionskammer ist beispielsweise durch die EP 1 500 357 bekannt geworden. Die einzelnen konstruktiven Details und die Wirkungsweise einer derartigen Extraktionskammer werden daher als bekannt vorausgesetzt und hier nicht weiter beschrieben.

Das Verschlussteil kann einen Injektorkolben enthalten, der mittels wenigstens eines Federelements (z.B. eine Schraubendruckfeder) unter Vorspannung verschiebbar in einem Lager des Verschlussteils gehalten ist. Auf diese Weise können die fertigungs- und/oder konstruktionsbedingten Toleranzen derart kompensiert werden, dass zum Bilden der Extraktionskammer das Verschlussteil in Schliessstellung eine Presskraft gegen den Kapselhalter ausübt.

In einer weiteren Ausführungsform der Vorrichtung kann ein Hydrauliksystem mit einer Druckwasserquelle vorgesehen sein, wodurch bzw. mit dessen Hilfe nach Erreichen der Schliessstellung des Kapselhalters und des Verschlussteils die Kammerteile zur Bildung der Extraktionskammer dichtend gegeneinander pressbar sind. Somit erfolgt der Schliessvorgang insgesamt in zwei grundlegenden Schritten: zuerst wird (beispielsweise mittels des Betätigungshebels) also der Kapselhalter und das Verschlussteil in eine Schliessstellung gebracht, und dann wird der Injektorkopf zusätzlich hydraulisch gegen den Kapselhalter gepresst.

Besonders vorteilhaft kann es sein, wenn das Hydrauliksystem zur Bildung der dichten Extraktionskammer und ein Brühwassersystem zur Bereitstellung des Extraktionsmittels, voneinander getrennt ausgebildet sind. Eine solche Trennung könnte insbesondere dadurch erreicht werden, dass jeweils ein Wasseraufnahmebehälter für das Hydrauliksystem und ein Wasseraufnahmebehälter für das Brühwassersystem vorgesehen sind. In der Praxis hat sich gezeigt, dass voneinander getrennte Hydrauliksysteme und Brühwassersysteme auch für konventionelle Vorrichtungen zum Extrahieren eines in einer Kapsel enthaltenen Extraktionsgutes vorteilhaft sein können. Eine solche Trennung der beiden Systeme hat insbesondere steuerungstechnische Vorteile. Einem Fachmann ist klar, dass diese Vorteile auch für konventionelle Kapsel-Extraktionsvorrichtungen, insbesondere für Vorrichtungen mit einer anderen Ausgestaltung der relativen Schliessbewegung zwischen Kapselhalter und Verschlussteil Vorteile bringen kann.

In einer weiteren Ausführungsform der Vorrichtung können dem Verschlussteil Hilfsmittel zum Entfernen der Kapsel aus der Kavität bei der Verschiebung des Verschlussteils in Öffnungsrichtung zugeordnet sein. Denn je nach Kapsel und/oder Ausgestaltung einer am Boden der Kavität angebrachten Filterplatte oder auch infolge Verklebens durch Extraktionsrückstände kann es vorkommen, dass die Kapseln in der Auswurfstellung lediglich unter Ausnutzung der Schwerkraft nicht herausfallen können. Mit dem Hilfsmittel wird erreicht, dass die Kapsel beim Öffnungsvorgang teilweise aus der Kavität herausgezogen werden kann, wodurch ein Herunterfallen infolge Schwerkraft sichergestellt ist.

Bevorzugt kann das Hilfselement ein Greifelement sein, das eine Hinterschneidung aufweist. Dabei ist das Greifelement derart ausgestaltet, dass es beim Verschieben des Verschlussteils in Schliessrichtung einen Kragen einer in der Kavität eingesetzten Kapsel überfahren kann und die Hinterschneidung für den Auswurfvorgang, d. h. beim Verschieben des Verschlussteils von der Schliessstellung in Auswurfstellung in Schliessrichtung, einen Anschlag für den Kapselkragen bildet. Vorteilhaft weist das Greifelement eine schräg verlaufene Keilfläche auf, wodurch beim Schliessvorgang ein vorteilhaftes Überfahren erfolgen kann. In Schliessstellung kann somit das Greifelement mit dem Kapselkragen in einer Art Schnappverbindung in Eingriff stehen. Ein solches Hilfsmittel zum Entfernen der Kapsel aus der Kavität kann auch für konventionelle Kapsel-Extraktionsvorrichtungen vorteilhaft sein. Insbesondere ist die vorgängig beschriebene Relativbewegung zwischen Kapselhalter und Verschlussteil nicht zwingend notwendig zum Erzielen der Vorteile solcher Hilfsmittel. Weiterhin wäre es beispielsweise vorstellbar, die Hilfsmittel in einer Vorrichtung einzusetzen, bei welcher die Auswurfstellung der Aufnahmestellung entspräche, wobei der Kapselhalter nicht schwenkbar in der Vorrichtung gelagert sein müsste.

Der Support kann aus zwei Supporthälften zusammensetzbar sein, deren Teilungsebene senkrecht zur Schwenkachse des Kapselhalters verläuft. Besonders bevorzugt verläuft die Teilungsebene weiterhin durch die Längsachse des Verschlussteils. Somit werden für die Vorrichtung verhältnismässig wenige Bauteile benötigt. Ein weiterer Vorteil dieser Anordnung ist es, dass eine einfache Montage und Demontage gewährleistet ist.

Weitere Vorteile und Einzelmerkmale der Erfindung ergeben sich aus der nachfolgenden Beschreibung von Ausführungsbeispielen und aus den Zeichnungen. Es zeigen:
- Fig. 1: die schematische Darstellung einer Kaffeemaschine mit einer erfindungsgemässen Vorrichtung,
- Fig. 2: eine perspektivische Darstellung einer ersten Ausführungsform der Vorrichtung mit schwenkbarem Kapselhalter und verschiebbarem Verschlussteil,
- Fig. 3: eine Draufsicht auf die Vorrichtung gemäss Fig. 2,
- Fig. 4: einen Querschnitt durch die Ebene V - V gemäss Fig. 3,
- Fig. 5: einen Querschnitt durch die Ebene VI - VI gemäss Fig. 4,
- Fig. 6a/6b/6c: den Schliessvorgang der Extraktionskammer an der Vorrichtung gemäss Fig. 2 in verschiedenen Sequenzen,
- Fig. 7: einen Querschnitt durch die Ebene V -V gemäss Fig. 3 in der Schliessstellung,
- Fig. 8: einen Querschnitt durch die Ebene VII - VII gemäss Fig. 7,
- Fig. 9: einen Querschnitt durch die Ebene V - V gemäss Fig. 3 in der Auswurfstellung,
- Fig. 10: einen Querschnitt durch die Ebene VIII - VIII gemäss Fig. 9,
- Fig. 11: eine perspektivische Darstellung einer zweiten Ausführungsform der Vorrichtung mit schwenkbarem Kapselhalter und verschiebbarem Verschlussteil,
- Fig. 12: eine perspektivische Darstellung der Vorrichtung gemäss Fig. 11 in einem Längsschnitt,
- Fig. 13: eine perspektivische Darstellung eines Kapselhalters der Vorrichtung gemäss Fig. 11,
- Fig. 14: einen Querschnitt durch den Kapselhalter gemäss Fig. 13,
- Fig. 15: eine perspektivische Darstellung eines Verschlussteils für die Vorrichtung gemäss Fig. 11,
- Fig. 16: eine perspektivische Darstellung eines Injektorkolbens des Verschlussteils gemäss Fig. 15 (bzw. der Vorrichtung gemäss Fig. 11),
- Fig. 17a: einen Längsschnitt durch eine Teilungsebene der Vorrichtung gemäss Fig. 11 in Aufnahmestellung (Schnittebene T gemäss Fig. 11) bzw. eine Draufsicht der Schnittdarstellung gemäss Fig. 12,
- Fig. 17b: einen weiteren Längsschnitt der Vorrichtung in Aufnahmestellung mit einem Rückführmittel (Schnittebene F gemäss Fig. 11),
- Fig. 17c: einen weiteren Längsschnitt der Vorrichtung in Aufnahmestellung mit einem Schubelement und einem Positionierteil (Schnittebene H gemäss Fig. 11),
- Fig. 17d: einen weiteren Längsschnitt der Vorrichtung in Aufnahmestellung (Schnittebene G gemäss Fig. 11),
- Fig. 18a/18b/18c: die gleichen Schnitte wie Figuren 17a/17b/17c, jedoch nach einer ersten Verschiebung des Verschlussteils in Schliessrichtung (Kapselhalter in Schliessstellung),
- Fig. 19a/19b/19c: die gleichen Schnitte wie Figuren 17a/17b/17c, jedoch mit einem Verschlussteil nach einer fortgesetzten Verschiebung in Schliessrichtung (Kapselhalter und das Verschlussteil in Schliessstellung),
- Fig. 20a/20b/20c: die gleichen Schnitte wie Figuren 17a/17b/17c, jedoch mit einem nach der Schliessstellung in Öffnungsrichtung verschobenen Verschlussteil,
- Fig. 21a/21b/21c: die gleichen Schnitte wie Figuren 17a/17b/17c, jedoch mit einem nochmals weiter in Öffnungsrichtung verschobenen Verschlussteil (Kapselhalter in Auswurfstellung),
- Fig. 22a/22b/22c: die gleichen Schnitte wie Figuren 17a/17b/17c, jedoch mit einem nochmals weiter in Öffnungsrichtung verschobnen Verschlussteil (kurz vor Erreichen der Ausgangsstellung gemäss den Figuren 17),
- Fig. 23: eine perspektivische Rückansicht der Vorrichtung gemäss Figur 11 in Schliessstellung,
- Fig. 24: eine Stirnansicht der Vorrichtung gemäss Fig. 23,
- Fig. 25: einen Schnitt durch die Vorrichtung gemäss Fig. 23 (Schnitt J-J gemäss Fig. 24),
- Fig. 26: den Schnitt H-H gemäss Fig. 24,
- Fig. 27: den Schnitt G-G gemäss Fig. 24,
- Fig. 28: den Schnitt F-F gemäss Fig. 24,
- Fig. 29: eine prinzipielle Darstellung eines Brühwassersystems und Hydrauliksystems für eine erfindungsgemässe Vorrichtung,
- Fig. 30: ein alternatives Ausführungsbeispiel des Systems gemäss Fig. 29,
- Fig. 31: eine perspektivische Darstellung einer Vorrichtung mit verschiebbarem Kapselhalter und verschiebbarem Verschlussteil in geöffnetem Zustand mit einer alternativen Kurvensteuerung für den Kapselhalter,
- Fig. 32: eine perspektivische Innenansicht auf die Steuerkurve an der Vorrichtung gemäss Fig. 31,
- Fig. 33: einen Schnitt durch die Ebene VIII - VIII gemäss Fig. 31 in der Aufnahmestellung,
- Fig. 34: einen Schnitt durch die Ebene IX - IX gemäss Fig. 33 (zum besseren Verständnis gewendet),
- Fig. 35: einen Schnitt durch die Ebene VIII - VIII gemäss Fig. 31 in der Schliessstellung,
- Fig. 36: einen Schnitt durch die Ebene X - X gemäss Fig. 35 (zum besseren Verständnis gewendet),
- Fig. 37: einen Schnitt durch die Ebene VIII - VIII gemäss Fig. 31 in der Auswurfstellung, und
- Fig. 38: einen Schnitt durch die Ebene XI - XI gemäss Fig. 37 (zum besseren Verständnis gewendet).

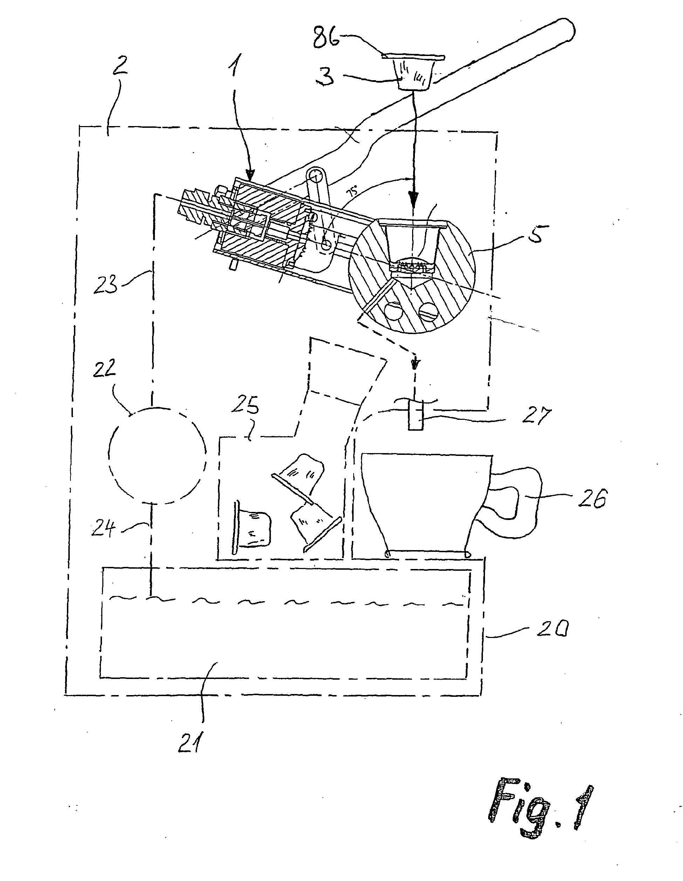

In Fig. 1 ist eine Brühvorrichtung, beispielsweise eine Kaffeemaschine 2 dargestellt, in welcher eine erfindungsgemässe Vorrichtung als Modul 1 eingebaut ist. Mit einer derartigen Vorrichtung kann der Inhalt einer Kapsel 3 extrahiert werden, wobei es sich nicht nur um Kaffee, sondern auch um Tee, oder um Kakao handeln kann. Selbstverständlich ist die erfindungsgemässe Vorrichtung aber nicht auf die Verwendung in derartigen Brühvorrichtungen zum Herstellen von Getränken beschränkt. Denkbar wäre auch ein Einsatz für chemisch/wissenschaftliche Extraktionsgeräte, beispielsweise zum Extrahieren von Proben, die zu Konservierungszwecken vorher verkapselt worden sind.

Die Kaffeemaschine 2 verfügt auf an sich bekannte Weise über eine Verschalung 20, in welcher neben dem Modul 1 auch ein Wasserbehälter 21 und eine Pumpe 22 untergebracht sind. Das Wasser wird über eine Saugleitung 24 angesaugt und über eine Druckleitung 23 dem Modul 1 zugeführt. Eine nicht näher dargestellte Heizeinrichtung sorgt für die erforderliche Wassertemperatur bzw. für den nötigen Wasserdruck. Der fertige Kaffee fliesst über einen Ausguss 27 in eine bereitgestellte Tasse 26. Innerhalb der Verschalung kann auch ein Auffangbehälter 25 für verbrauchte Kapseln angeordnet sein. Für die Kaffeezubereitung wird eine Kapsel 3 in aufrechter Lage in den Kapselhalter 5 des Moduls 1 eingelegt. Anschliessend wird der Schwenkhebel 11 nach unten geschwenkt, wobei die Schliessstellung erreicht wird. In dieser Position wird die Pumpe betätigt, wobei dies über einen separaten Schalter oder automatisch über einen Sensor erfolgen kann. Nach dem Extraktionsvorgang (hier vereinfacht: Brühstellung entspricht Schliessstellung) wird der Schwenkhebel 11 wieder nach oben geschwenkt, wobei der Kapselhalter 5 zunächst in die Auswurfstellung weiterdreht, so dass die extrahierte Kapsel in den Auffangbehälter 25 fällt. Einzelheiten des Moduls 1 werden nachstehend beschrieben.

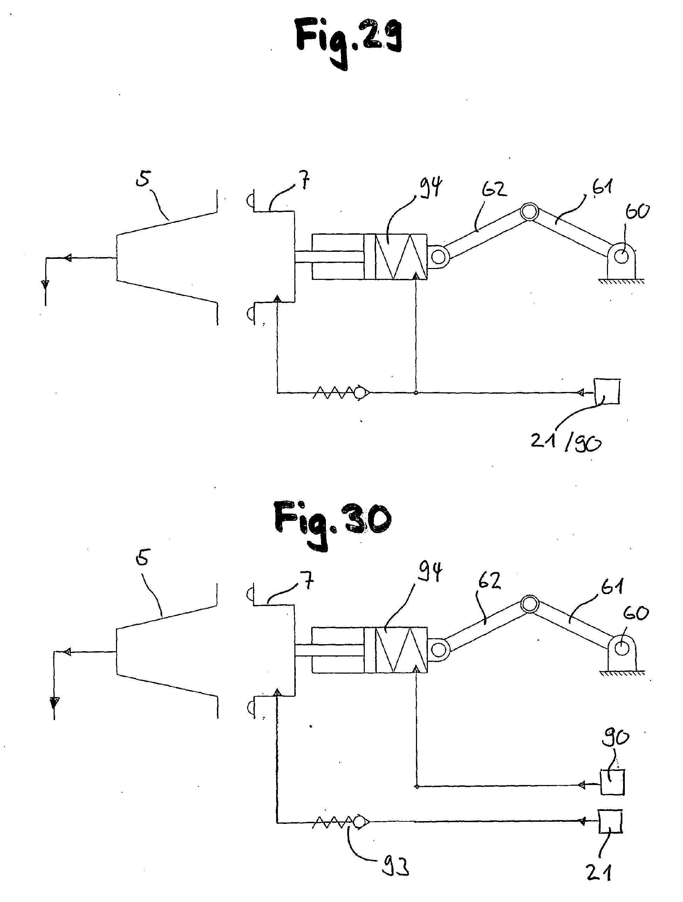

Selbstverständlich könnten zusätzliche hydraulische Mittel vorgesehen sein, mit welchen nach Erreichen der Schliessstellung eine bestimmte Presskraft für ein vorteilhaftes dichtendes Verschliessen der Kavität in Brühstellung erzielbar wäre (vgl. nachfolgende Figuren 29 und 30).

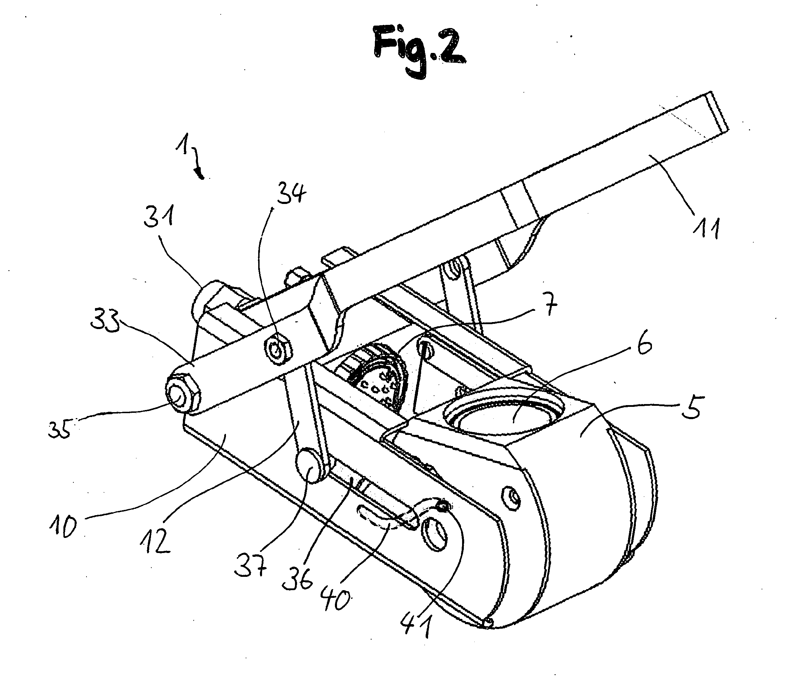

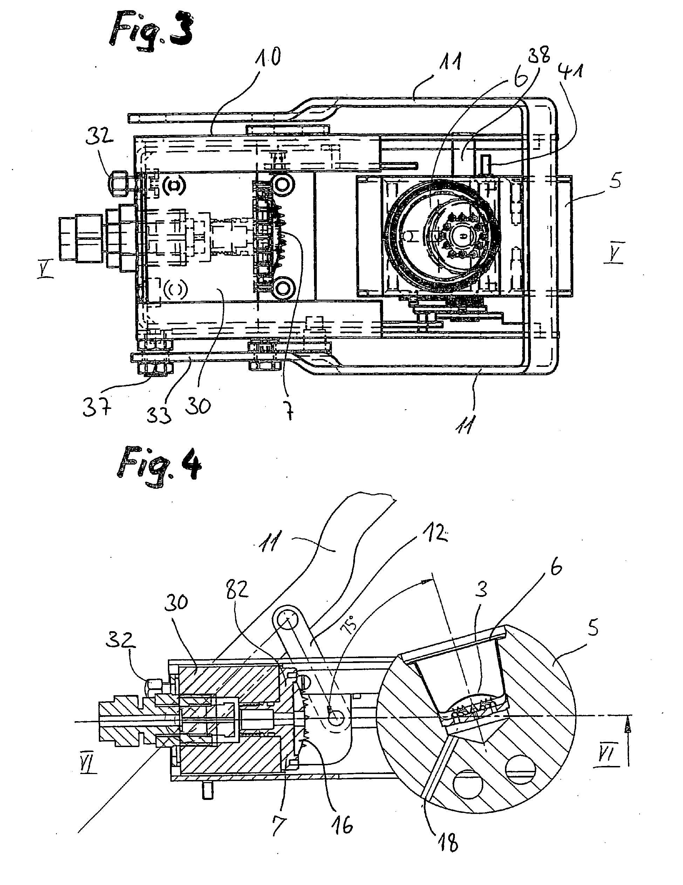

Konstruktive Einzelheiten einer ersten Ausführungsform der Erfindung ergeben sich aus Fig. 2 in Kombination mit den Fig. 3 bis 5. In einem Support 10 ist auf einer Stirnseite ein Halteteil eines Verschlussteils 7 ist. Dieses Verschlussteil weist den eigentlichen Injektorkopf 16 auf, der eine mit Spitzen versehene, kalottenförmige Oberfläche bildet. Der Injektorkopf ist über einen Anschlussstutzen 31 mit der Druckseite der Pumpe verbunden.

Im Support 10 ist ferner der mit einem Schlitten 15 verbundene Halteblock 30 des Injektors linear verschiebbar gelagert. Der Kapselhalter ist über Achsstummel 38, drehbar im Support 10 gelagert. Der scheibenartig ausgebildete Kapselhalter ist mit einer etwa konischen Kavität 6 versehen, welche eine Kapsel aufnehmen kann. Am Boden der Kavität ist eine ebenfalls mit Spitzen versehene Filterplatte angeordnet, wobei eine Ableitung 18 den unter der Filterplatte anfallenden Extrakt ableiten kann.

Schliesslich ist am Support 10 auch noch ein Schwenkhebel 11 angelenkt, der über eine Koppel 12 verfügt. Diese Koppel 12 ist über das Koppelgelenk 34 gelenkig mit dem Betätigungshebel 11 verbunden. Das Ende 33 des Schwenkhebels 11 ist mit Führungsbolzen 37 versehen, welche einerseits gelenkig mit dem Schlitten 15 verbunden sind und welche anderseits in eine Geradeführung 36 im Support 10 eingreifen. Ein Niederdrücken des Schwenkhebels 11 bewirkt ersichtlicherweise eine lineare Verschiebung des Verschlussteils 7. Der Schwenkhebel 11 ist weiterhin an seinem Ende 33 direkt am Support 10 angelenkt. Die Koppel 12 greift mit ihren Führungsbolzen 37 gelenkig in den Schlitten 15, wobei die Führungsbolzen in der Geradeführung 36 geführt sind. Im Schlitten 15 ist der Halteblock 30 mit dem Verschlussteil 7 fixiert. Ein Niederdrücken des Schwenkhebels 11 bewirkt ersichtlicherweise eine Verschiebung des Schlittens 15 gegen den Kapselhalter 5.

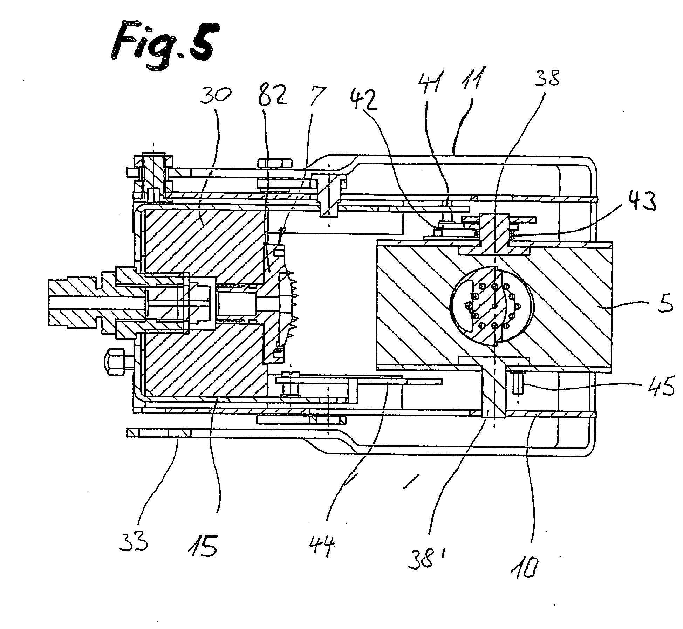

Die Drehbewegung des Kapselhalters 5 wird über eine hier nicht näher beschriebene Kurvensteuerung bewirkt, von welcher in Fig. 2 eine Steuerkurve 40 und ein Steuerbolzen 41 gerade noch sichtbar sind. Die Schwenkbewegung des Kapselhalters wird über Steuerbolzen 41 ausgeführt, der in eine Steuerkurve 40 eingreift, welche dem Schlitten 15 zugeordnet ist. Der Steuerbolzen sitzt auf einem Steuerhebel 42 (Fig. 5), der auf den Achsstummel 38 aufgesetzt ist. Über ein Federelement 43, das ebenfalls auf dem Achsstummel 38 sitzt, ist der Kapselhalter 5 in die Aufnahmestellung vorgespannt. Die Weiterdrehung des Kapselhalters 5 von der Schliessstellung in die Auswurfstellung wird mit einer Sperrklinke 44 und einem Sperrbolzen 45 erreicht.

Damit sich der Kapselhalter 5 beim Hochschwenken des Betätigungshebels 11 und damit beim Zurückziehen des Verschlussteils 7 zunächst im gleichen Drehsinn in die Auswurfstellung weiterdreht, ist am Kapselhalter seitlich ein Sperrbolzen 45 angeordnet, der mit einer Sperrklinke 44 am Support 10 zusammenwirkt. Die Sperrklinke 44 wird beim Anfahren der Schliessstellung zunächst überfahren, liegt aber anschliessend am Sperrbolzen 45 an und bewirkt so beim weiteren Zurückziehen des Schlittens 15 gegen die Vorspannkraft des Federelements 43 eine weitere Drehung, bis das Federelement entspannt wird und den Kapselhalter wieder in die Aufnahmestellung zurückführt.

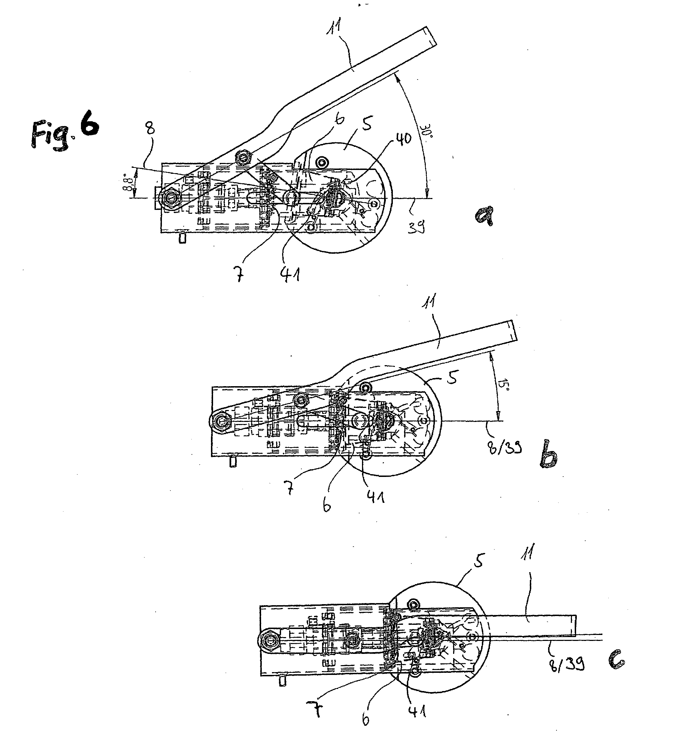

In den Figuren 6a bis 6c ist die Schliessbewegung des Schwenkhebels 11 in verschiedenen Sequenzen dargestellt. Dabei ist gut ersichtlich, wie sich das Verschlussteil 7 gegen den sich drehenden Kapselhalter 5 bewegt, bis am Schluss wiederum die Extraktionskammer geschlossen ist. Gemäss Fig. 6a nimmt der Schwenkhebel eine Position von 30° zur Längsmittelachse 39 des Moduls ein. Die Kavität 6 des Kapselhalters 5 hat dabei bereits eine Drehbewegung zurückgelegt, und die Achse 8 der Kavität ist zur Längsmittelachse 39 um 8.8° geneigt. Der Steuerbolzen 41 hat bereits den grössten Teil des gekrümmten Abschnitts der Steuerkurve 40 zurückgelegt. Der Führungsbolzen 37 hat etwas mehr als die Hälfte des Weges in der Geradeführung 36 zurückgelegt.

Gemäss Fig. 6b beträgt der Winkel zwischen dem Betätigungshebel 11 und der Längsmittelachse 39 nur noch 15°. Die Achse 8 der Kavität 8 fällt jetzt praktisch mit der Längsmittelachse 39 des Moduls zusammen, und der Kapselhalter 5 steht unmittelbar vor dem Verschlussteil 7.
Gemäss Fig. 6c verläuft auch der Schwenkhebel 11 in der Längsmittelachse 39, und der Steuerbolzen 41 hat die Steuerkurve 40 vollständig abgefahren. Der Kapselhalter 5 hat jetzt das Verschlussteil 7 erreicht, womit die eigentliche Extraktionskammer 4 gebildet wird.

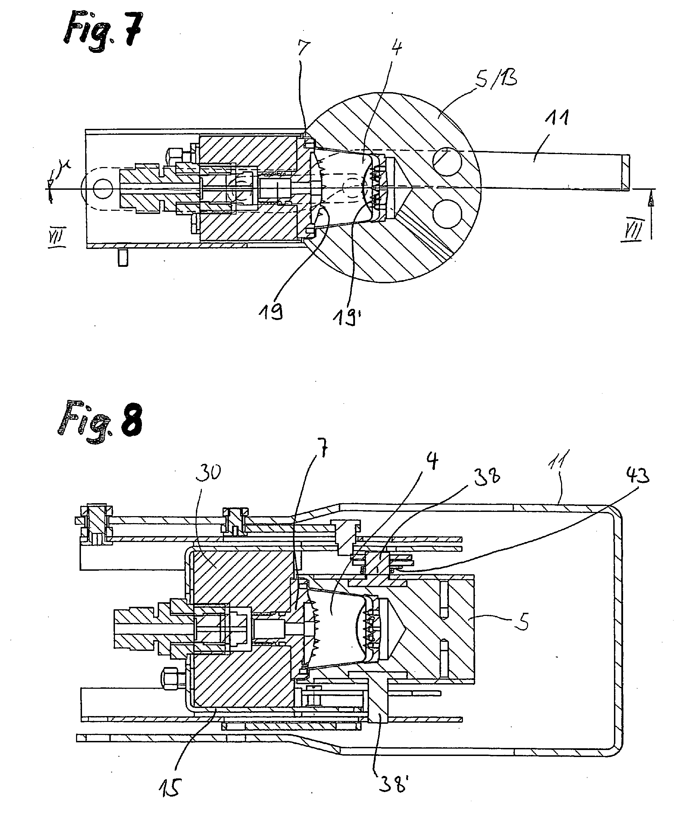

Die Figuren 7 und 8 zeigen die Schliessstellung B etwas detaillierter. Da sich beim Extraktionsprozess in der Extraktionskammer 4 ein Druck von über 10 bar aufbaut, muss sichergestellt werden, dass dieser Druck das Hebelgetriebe nicht reversieren kann. Zu diesem Zweck muss der Schwenkhebel 11 den Totpunkt überschreiten und einen zusätzlichen Sperrwinkel γ zurücklegen.

Wie in der eingangs erwähnten EP 1 500 357 beschrieben, penetrieren die Spitzen 19 des Injektorkopfs 16 in der Schliessstellung die Deckelfolie der Kapsel (hier nicht dargestellt), und durch die so entstandenen Öffnungen wird über den Anschlussstutzen 31 das Brühwasser in die Kapsel eingeführt. Beim so aufgebauten Druck in der Kapsel penetrieren die Spitzen 19' an der Filterplatte 17 den Boden der Kapsel, und der Extrakt wird durch die Ableitung 18 abgeführt.

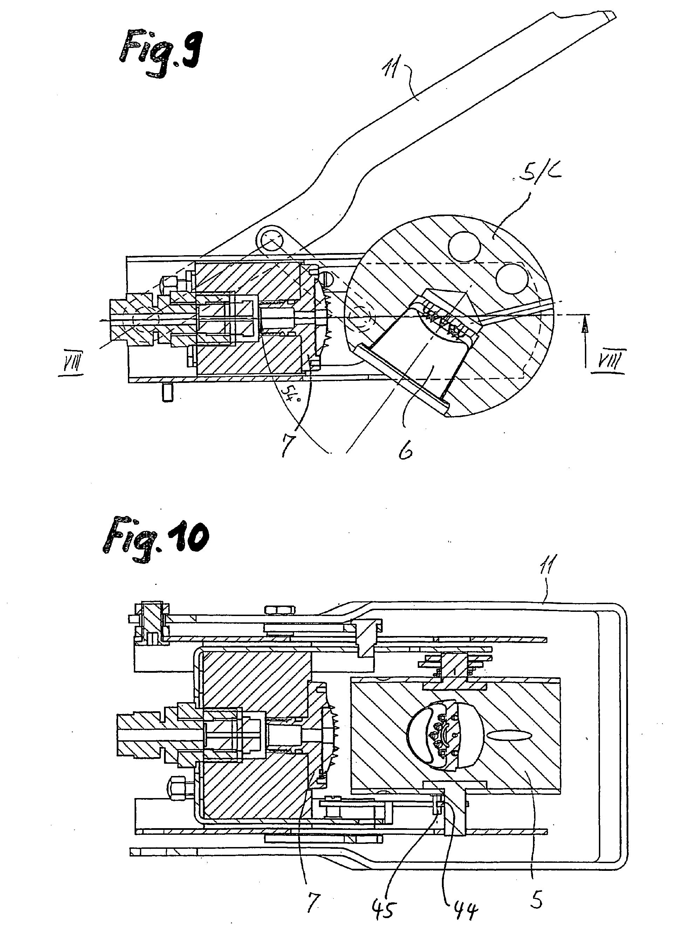

Die Figuren 9 und 10 zeigen das Erreichen der Auswurfstellung C beim Zurückschwenken des Schwenkhebels 11. Diese Stellung wird bei einer bestimmten Neigung des Schwenkhebels zur Längsmittelachse 39 gemäss Figur 9 erreicht. Der an den Führungsbolzen 37 angelenkte Schlitten 15 ist bereits wieder zurückgefahren, und der Kapselhalter 5 hat sich zur Längsmittelachse 39 um einen Winkel von 54° weitergedreht. Diese Drehung im gleichen Drehsinn trotz reversierender Schlittenbewegung wird dadurch erreicht, dass der Sperrbolzen seitlich an der Sperrklinke 44 anliegt, welche bei der Vorwärtsbewegung des Schlittens überfahren wurde. Beim weiteren Hochschwenken des Schwenkhebels 11 sorgt das Federelement 43 dafür, dass der Kapselhalter 5 wieder in die in Fig. 4 gezeigte Aufnahmestellung A zurückgeführt wird.

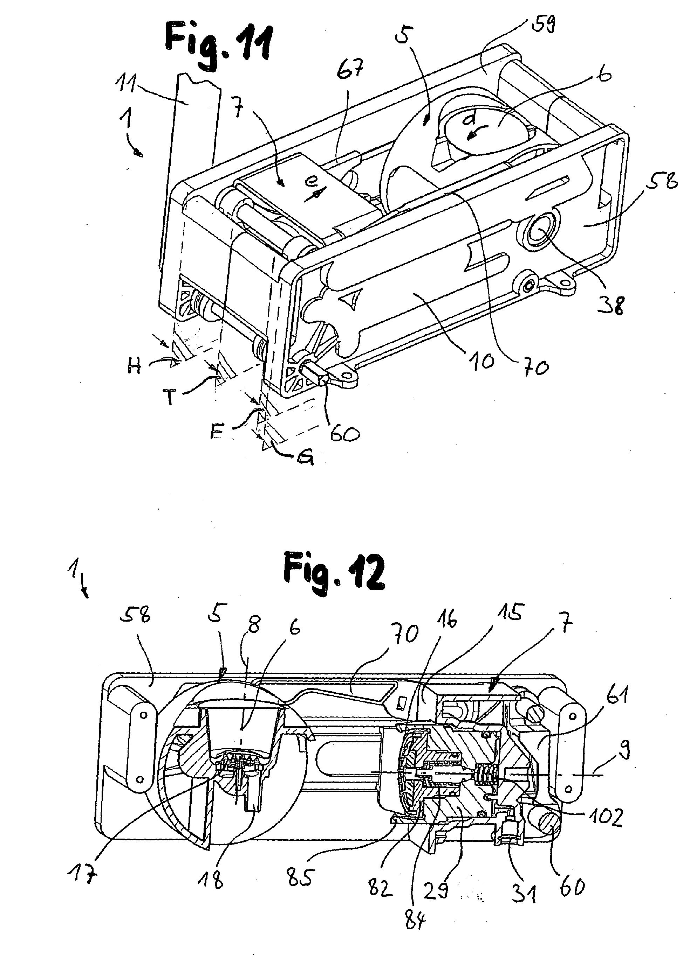

Die Figuren 11 bis 28 zeigen ein weiteres Ausführungsbeispiel einer Vorrichtung 1, bei welcher der Kapselhalter 5 nur schwenkbar und das Verschlussteil nur verschiebbar gelagert ist. Wie aus der Gesamtdarstellung der Vorrichtung 1 gemäss Fig. 11 hervorgeht, ist der Kapselhalter 6 über Achsstummel 38 drehbar im Support 10 gelagert (eine Drehrichtung von der hier gezeigten Aufnahmestellung in eine Schliessstellung ist mit d angedeutet). Das Verschlussteil 7 ist in e-Richtung verschiebbar im Support 10 gelagert, wobei die Verschiebung über die Achse 60 mit Hilfe des Betätigungshebels 11 erfolgt (der Betätigungshebel ist auf der Rückseite der Achse 60 lediglich angedeutet). Auf der Vorderseite der Achse ist ein vierkantiges Ende der Achse 60 erkennbar, an welcher der Betätigungshebel formschlüssig befestigbar ist.

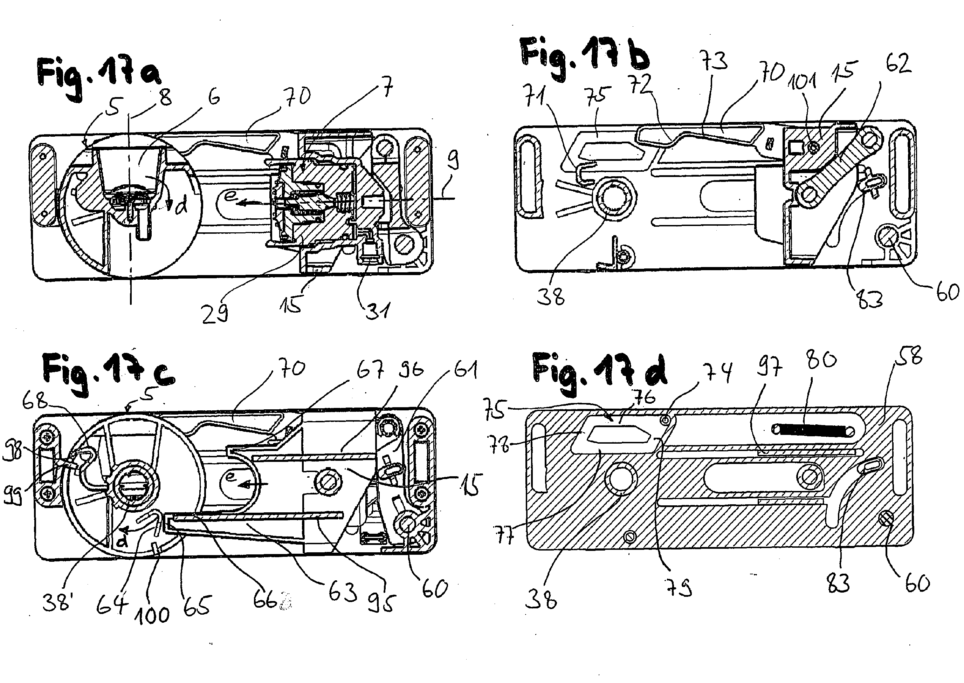

Weiterhin ist aus Fig. 11 ersichtlich, dass der Support 10 lediglich aus zwei Bauteilen, nämlich den Supporthälften 58 und 59, besteht. Diese Supporthälften bestehen jeweils aus einer sich in Längsrichtung (e) erstreckenden Seitenwand, an welcher an jeder kurzen Stirnseite ein Befestigungsabschnitt angeformt ist (vgl. Fig. 12 für die Supporthälfte 58). Die Supporthälften sind durch die Teilungsebene T voneinander getrennt und können mittels Befestigungsschrauben (vgl. z. B. Fig. 17c) zum Zusammensetzen miteinander verbunden werden.

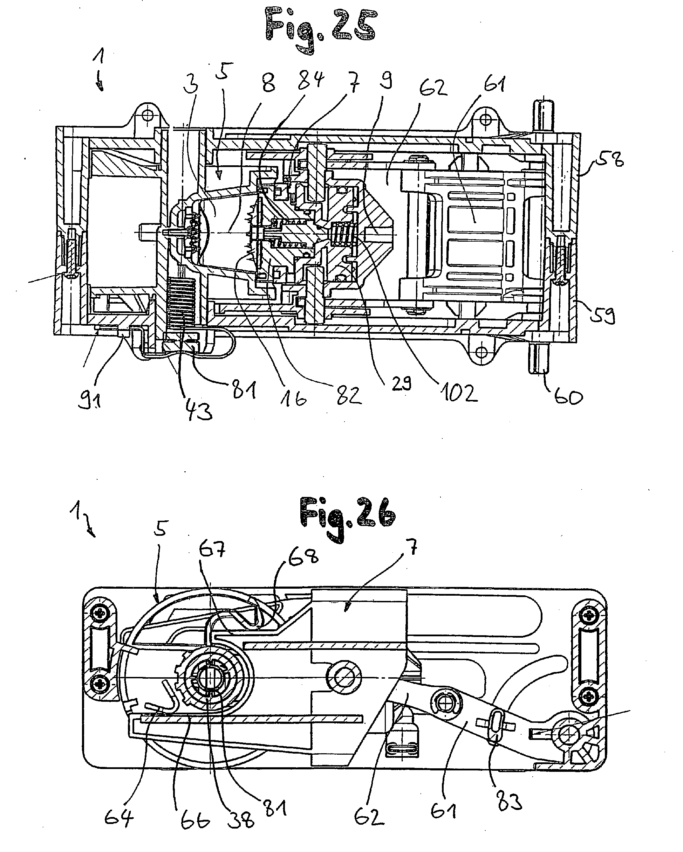

Aus der Schnittdarstellung gemäss Fig. 12 der Vorrichtung 1 ist die konstruktive Ausgestaltung des Kapselhalters 5 einerseits und der Verschlussvorrichtung 7 anderseits gut erkennbar. So erkennt man etwa, dass am Boden der Kavität 6 eine Filterplatte 17 angeordnet ist. Der Kapselhalter 5 ist etwa gleichartig wie der Kapselhalter gemäss dem erstem Ausführungsbeispiel (vgl. hier z.B. Fig. 4) ausgebildet. Im Gegensatz zu diesem Kapselhalter ist er jedoch nicht als nahezu volle Scheibe ausgestaltet. Der Kapselhalter weist aus Gewichtsgründen und fertigungstechnischen Gründen mehrere Hohlkammern auf. Der Extraktionsmechanismus des Verschlussteils 7 ist grundsätzlich gleichartig wie im ersten Ausführungsbeispiel (vgl. wiederum Fig. 4) ausgebildet. Das Verschlussteil 7 besteht aus einem Injektorkopf 16, der an einer Injektorkopfhalterung 82 befestigt ist, die wiederum an einem Injektorkolben 29 befestigt ist (vgl. Fig. 25). Um den Injektorkolben 29 ist ein Schlitten 15 angeordnet, der verschiebbar im Support gelagert ist. Die Vorrichtung 1 gemäss dem zweiten Ausführungsbeispiel unterscheidet sich jedoch in einer modifizierten Ausgestaltung der Relativbewegung zwischen Kapselhalter 5 und Verschlussteil 7. Diese Relativbewegung wird insbesondere anhand der Figuren 17 bis 22 im Detail erläutert. Weiterhin unterscheidet sich diese Vorrichtung 1 von der Vorrichtung gemäss dem ersten Ausführungsbeispiel dadurch, dass ein Hilfsmittel 85 zum Entfernen der Kapsel aus der Kavität am Verschlussteil 7 angebracht ist.

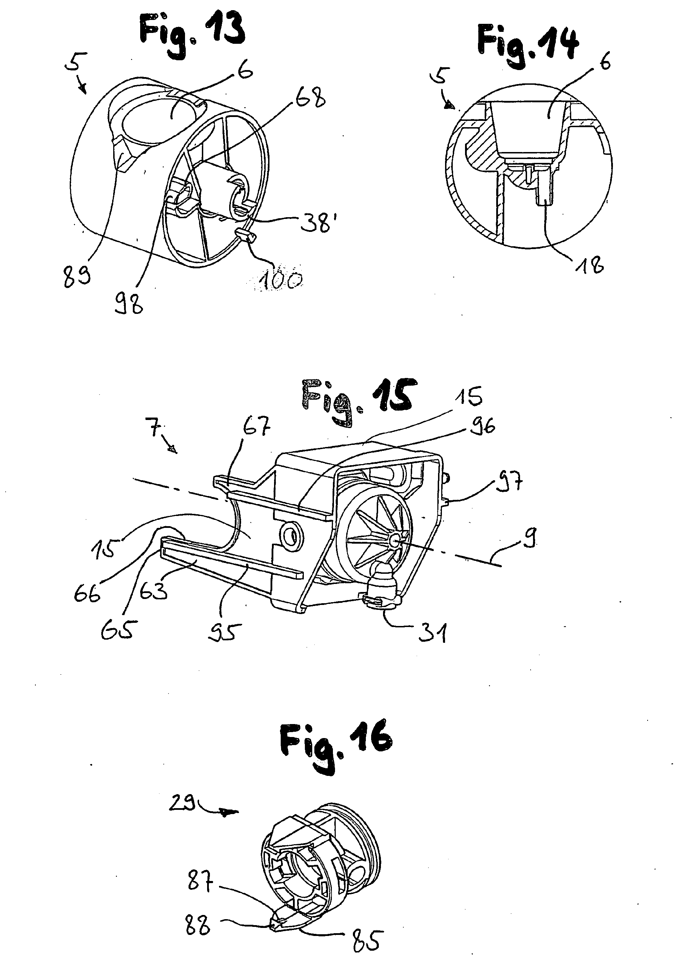

Die Figuren 13 und 14 zeigen einen demontierten Kapselhalter 5 der Vorrichtung gemäss Fig. 11. Wie insbesondere aus Fig. 14 hervorgeht, ist die Aussenkontur des Kapselhalters 5 im Querschnitt kreisförmig (Fig. 14: ohne Filterplatte 17). Die Aussparungen 89 neben der Kavität 6 im Verschlussteil 5 dienen zur Aufnahme der als Greifmittel ausgebildeten Herauszieh-Hilfsmittel. An der einen Stirnseite des Kapselhalters 5 sind - abgesehen von einem Achsstummel 38' - verschiedene, exzentrisch angeordnete Anschlagelemente erkennbar. Die Elemente 98 und 100 sind Anschlagmittel zum Festlegen der Aufnahmestellung und der Schliessstellung des Kapselhalters. Das mit 68 bezeichnete Element ist eine Positioniernase, die mit einem nachfolgend näher beschriebenen Positionierelement (67; vgl. Fig. 15) zusammenwirken kann. Dieses Bauteil ist als Spritzgussteil aus Kunststoff ausgestaltet.

Die Darstellung des Verschlussteils 7 gemäss Fig. 15 zeigt im Wesentlichen lediglich den Schlitten 15. Der verschiebbar im Support gelagerte Schlitten weist zur Führung der Verschiebebewegung mehrere Führungselemente auf. Auf einer Seite des Schlittens sind hierzu Längsschienen 95 und 96 angeordnet. Zwischen den Schienen 95 und 96 ist ein weiteres, jedoch kreisförmiges Führungselement erkennbar. Auf der gegenüberliegenden Seite sind ebenfalls zwei Längsschienen angeordnet, wobei in Fig. 15 lediglich die Längsschiene 97 erkennbar ist.

Fig. 15 zeigt sodann einen Stössel 63, dessen vorderes Ende einen Anstossabschnitt 65 definiert. An diesen Abschnitt schliesst ein sich in der Längsachse 9 (diese Längsachse gibt die Schliess- bzw. Öffnungsrichtung des Verschlussteils vor) erstreckender Gleitabschnitt 66 an. Auf der gleichen Seite wie der Stössel ist weiterhin das Positionierteil 67 angeordnet.

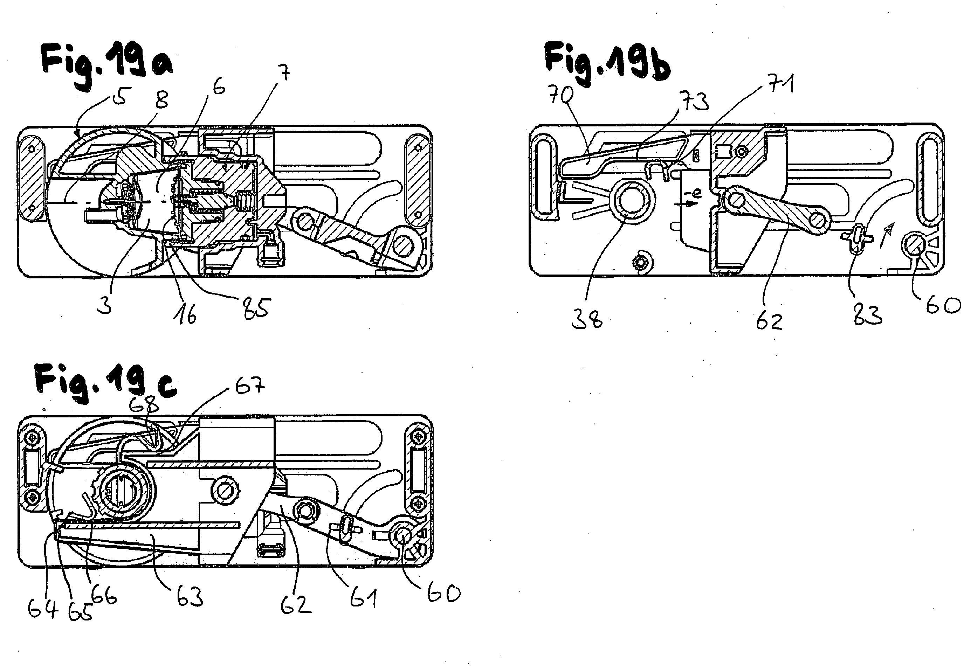

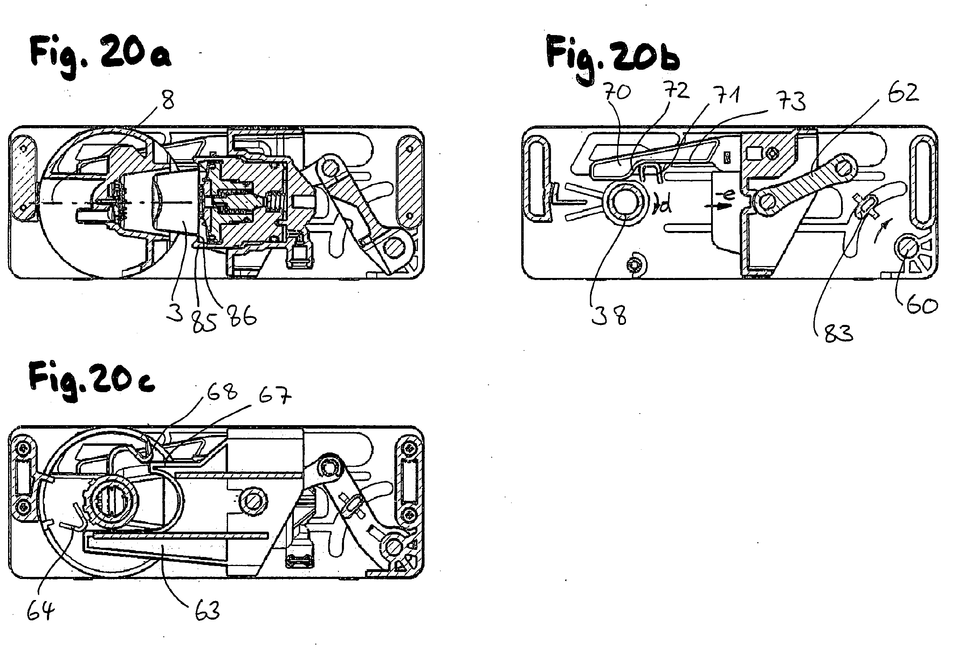

Fig. 16 zeigt einen demontierten Injektorkolben 29, der Bestandteil des Verschlussteils ist. Am vorderen Ende des Injektorkolbens sind jeweils einander gegenüberliegende Greifelemente 85 angeordnet. Diese Greifelemente weisen vorne einen keilförmigen Abschnitt 88 und eine an diese anschliessende Hinterschneidung 87 auf. Die Greifmittel 85 sind Hilfsmittel zum Herausziehen einer Kapsel aus der Kavität. Die Wirkungsweise eines solchen Hilfsmittels geht insbesondere aus den nachfolgenden Figuren 19a und 20a hervor.

Anhand der Figuren 17 bis 22 ist die genaue Funktionsweise der Vorrichtung ersichtlich. Dabei zeigen die mit a, b und c gekennzeichneten Figuren 17 bis 22 jeweils verschiedene Schnitte durch die Vorrichtung. So geht aus a die jeweilige Lage der Kavität 6 hervor. Aus b ist das Zusammenwirken zwischen dem Rückführmittel 70 und dem Anschlagelement 71 sowie aus c das Zusammenspiel zwischen dem Schubelement 63 und dem Anschlagelement 64 erkennbar.

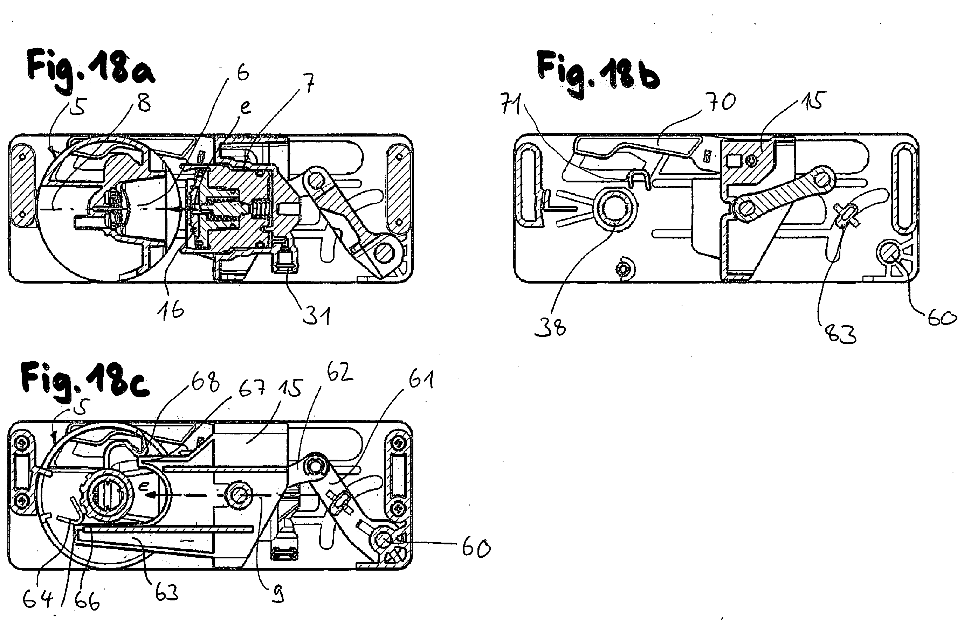

Die Figuren 17a, b und c zeigen die Vorrichtung in der Aufnahmestellung (bzw. Ausgangsstellung). Die Achse 8 der Kavität verläuft im vorliegenden Fall senkrecht zur Längsachse 9 der Vorrichtung, die durch die Verschiebeachse des Verschlussteils 7 definiert ist. Wie Fig. 17c zeigt, weist der Schlitten 15 des Verschlussteils ein als Stössel 63 ausgebildetes Schubelement auf. Am Kapselhalter 5 ist ein Anschlagelement 64 angeordnet, das in der Aufnahmestellung den Stössel noch nicht ganz berührt. Wird nun das Verschlussteil in e-Richtung (Schliessrichtung) bewegt, so wird das Anschlagelement 64 vom Anstossabschnitt 65 des Stössel 7 beaufschlagt, wodurch sich der Kapselhalter 5 in die mit d angedeutete Drehrichtung schwenken würde. Figur 18c zeigt den auf diese Weise geschwenkten Kapselhalter 5. Ersichtlicherweise ist in dieser Position (wie aus Fig. 18a hervorgeht) der Kapselhalter 5 bereits in der Schliessstellung, in welcher die Achse 8 der Kavität kongruent zur Längsachse bzw. zur Verschiebeachse des Verschlussteils verläuft. Das Verschlussteil 5 ist so weit geschwenkt, dass das Anschlagelement 64 nicht mehr vom Anstossabschnitt berührt wird. Nun liegt das Anschlagelement auf einem Gleitabschnitt 66 des Stössels auf. Dieser Gleitabschnitt 66 bildet eine Gleitfläche für das Anschlagelement 64 bei einer fortgesetzten Bewegung des Schlittens in e-Richtung. Da der Gleitabschnitt 66 sich in Schliessrichtung bzw. parallel zur Längsachse 9 erstreckt, verbleibt der Kapselhalter in der Schliessstellung (siehe Fig. 19c).

Aus Fig. 18c geht weiterhin hervor, dass am Schlitten ein Positionierteil 67 angeordnet ist, mit welchem die Schliessstellung des Kapselhalters fixiert werden kann. Hierzu ist am Kapselhalter eine Positioniernase 68 angeordnet, die einen Anschlag für das Positionierteil 67 bildet. Das Positionierteil 67 weist etwa analog zum Stössel einen Gleitabschnitt auf, der eine Gleitfläche für die Positioniernase 68 bei einer fortgesetzten Bewegung des Verschlussteils in e-Richtung bilden kann (vgl. Fig. 19c).

Die Bewegung des Verschlussteils und des Verschlusselements werden über die Achse 16 durch die Koppelanordnung mit den Pleuelelementen 61 und 62 in Gang gesetzt. Dabei ist das Pleuelelement 61 fix mit der Achse 60 verbunden. Die Pleuelelemente 61 und 62 sind gelenkig miteinander verbunden. Am Pleuelelement 61 ist ein Führungsglied 83 angeordnet, welches in einem etwa viertelkreisförmigen Führungskanal führbar ist (siehe hierzu Fig. 17b bis 22b). Selbstverständlich könnte die Verschiebbewegung des Verschlussteils auch mit einer Koppelanordnung gemäss erstem Ausführungsbeispiel ausgeführt sein.

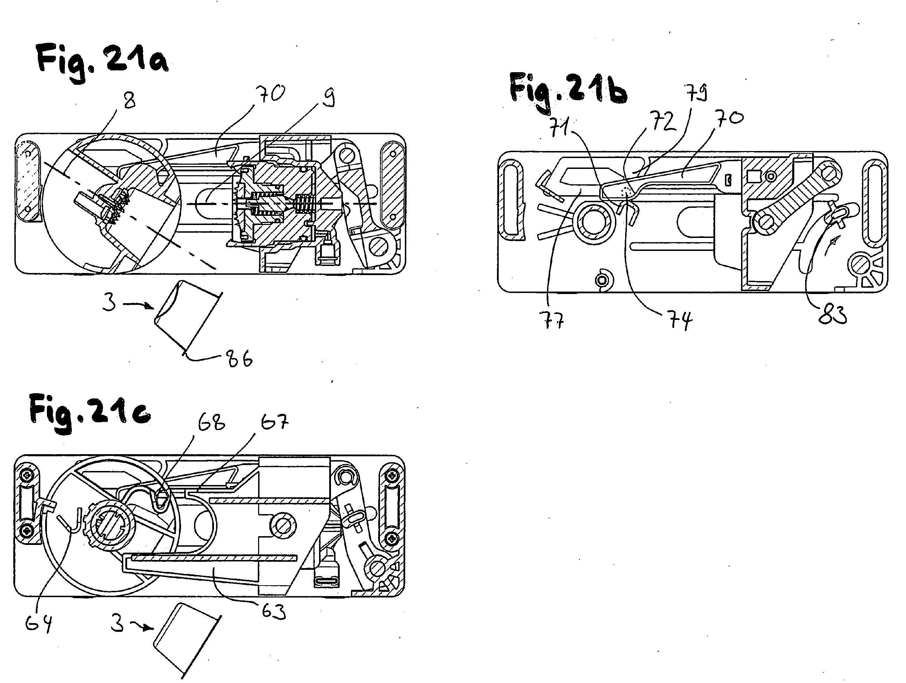

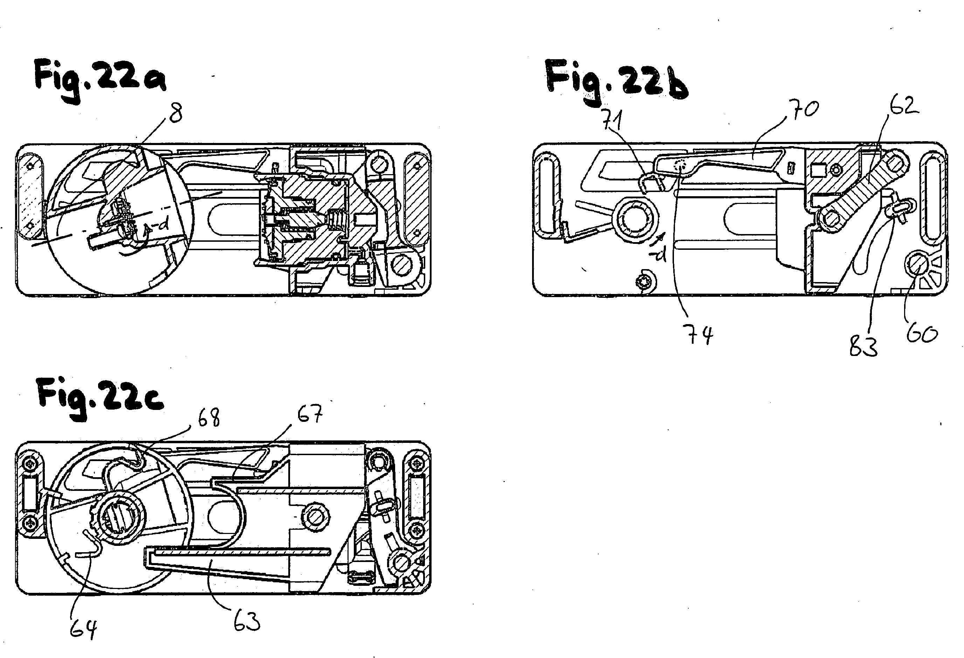

Am Schlitten 15 ist auf der Seite, die der Seite mit dem Stössel und dem Positionierteil gegenüberliegt, ein Zugglied 70 als Rückführmittel angeordnet. Das Zugglied ist als separates Bauteil ausgestaltet, das schwenkbar an einer Schwenkachse 101 am Schlitten 15 gelagert ist. Das Zugglied verfügt über ein Eingriffsglied (74, siehe Fig. 17d), mit dessen Hilfe das vordere Ende in einer Steuerbahn 75 führbar ist. Als Gegenstück für das Zugglied 70 ist ein Anschlagelement 71 am Kapselhalter angeordnet. Wie die Figuren 17b bis 19b zeigen, ist das Anschlagelement 71 im gesamten Schliessvorgang (siehe insbesondere Fig. 17b und 18b) vom Zugglied 70 nicht beaufschlagt. Erst bei Erreichen der Schliessstellung des Verschlussteils liegt das Zugglied 70 über seinem Gleitabschnitt 73 am Anschlagelement 71 an. Dieser Gleitabschnitt führt das Anschlagelement 71 bei der Bewegung des Verschlussteils in mit "-e" gekennzeichneter Schliessrichtung (Pfeil -e). Nach einem ersten Verschiebeweg berührt eine Auflaufflanke 72 das Anschlagelement 71. Durch eine weitere Verschiebung des Verschlussteils in Schliessrichtung kann nun der Kapselhalter weiter von der Schliessstellung in Drehrichtung (d) geschwenkt und so die in Fig. 21b gezeigte Auswurfstellung (vgl. Fig. 21a) erreicht werden. In den Positionen gemäss Fig. 21b befindet sich das Eingriffsglied 74 (gestrichelt angedeutet) etwa in der durch den Längsbahnabschnitt 77 und den Querbahnenabschnitt 79 gebildeten Ecke. Von dieser Position kann das Zugglied wieder zurückgeschwenkt werden. In Fig. 22b ist das Zugglied 70 kurz vor Erreichen der Ausgangsstellung erkennbar. Auf diese Weise kann der Kapselhalter 5 wieder in die Gegendrehrichtung -d geschwenkt werden (vgl. ebenfalls Fig. 22a) und würde die in Fig. 17 gezeigte Ausgangsstellung wieder einnehmen. Das Zurückschwenken des Kapselhalters 5 erfolgt unter Ausnutzung einer Rückstellkraft einer Federanordnung, die den Kapselhalter in die Aufnahmestellung vorspannt. Diese Federanordnung mit einem Federelement (43) ist insbesondere in Fig. 25 gezeigt.

Wie aus Fig. 17d hervorgeht, ist das Zugglied mit Hilfe einer Schraubenzugfeder in der Ausgangsstellung vorgespannt. Das Federelement 80 bewirkt eine Rückstellkraft, wodurch das Zugglied bei Erreichen des Querbahnabschnitts 79 (vgl. Fig. 21b) in den oberen Längsbahnabschnitt 76 gezwungen wird. In der Schliessstellung des Kapselhalters 5 und des Verschlussteils 7 ist eine Kapsel 3 in der Kavität 6 eingesperrt. In dieser Position steht das Greifelement 85 mit dem Kapselkragen 36 in Eingriff. Beim Öffnungsvorgang wirkt die Hinterschneidung 86 des Greifelements 85 als Anschlag für den Kapselkragen 86, wodurch die Kapsel 3 aus der Kavität 6 hervorgezogen werden kann. Ein solches Herausziehen durch dieses Hilfsmittel ist in Fig. 20a dargestellt. Das wenigstens teilweise Herausziehen der Kapsel ermöglicht ein Herunterfallen der Kapsel infolge Schwerkraft. Dies ist in Fig. 21a angedeutet.

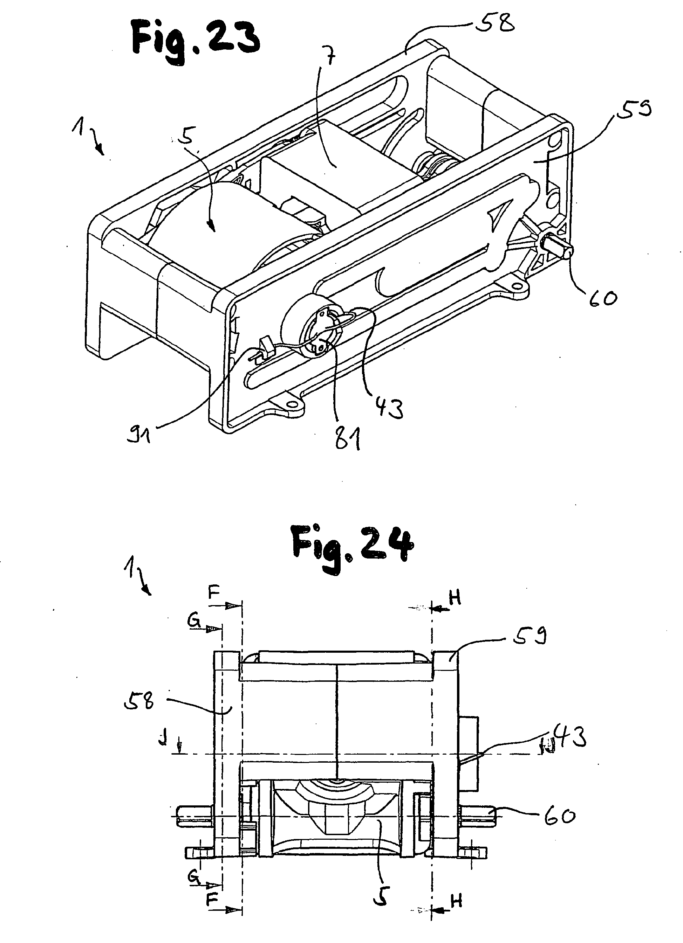

Fig. 23 zeigt die Vorrichtung 1 in Schliessstellung, jedoch im Gegensatz zur Darstellung gemäss Fig. 11 gedreht. Hieraus ist insbesondere erkennbar, dass an der Supporthälfte 59 in der Lagerung des Kapselhalters 5 ein Dämpfungselement 81 integriert ist. Dieses Dämpfungselement 81 ist durch einen Bügel des Federelements 43 im Lager festgehalten. Der Bügel selbst ist an einer Einsteckfixierung 91 am Support fixiert. Wie aus der Schnittdarstellung gemäss Fig. 25 hervorgeht, ist das Federelement 43 als Schenkelfeder ausgestaltet. Eine Schenkelfeder ist besonders geeignet zur Herstellung einer Vorspannung des Kapselhalters 5 in Aufnahmestellung.

Aus Figur 25 ist ersichtlich, dass der mit Penetrationsmitteln versehene Injektorkopf 16 zusammen mit der Injektorkopfhalterung 82 im Injektorkolben 29 angeordnet ist. Weiterhin ist erkennbar, dass der Injektorkolben 29 mittels einer Schraubendruckfeder zum Erzeugen einer Vorspannung in einem Lager des Verschlussteils verschiebbar gehalten ist. Dieses Lager ist einstückig mit dem Schlitten 15 ausgeführt. Diese Verschlussteil-Anordnung mit dem genannten Federelement ermöglicht eine Kompensation der infolge der beweglichen mechanischen Bauteile verursachten Toleranzen. Durch Aufbringen eines hydraulischen Drucks (vgl. nachfolgende Fig. 29 und 30) kann der Injektorkolben zum Erzeugen einer dichten Extraktionskammer gegen den Kapselhalter 3 verschoben werden. Hierzu sind in Figur 25 zwei O-Ringe zum Abdichten des Injektorkopfes und des Injektorkolben gezeigt. Ein mit einem Federelement 84 ausgerüstetes Rückschlagventil wird erst bei Überschreiten eines vorbestimmten Drucks aktiviert bzw. geöffnet und verhindert ein unerwünschtes Zurückfliessen des Extraktionsmittels.

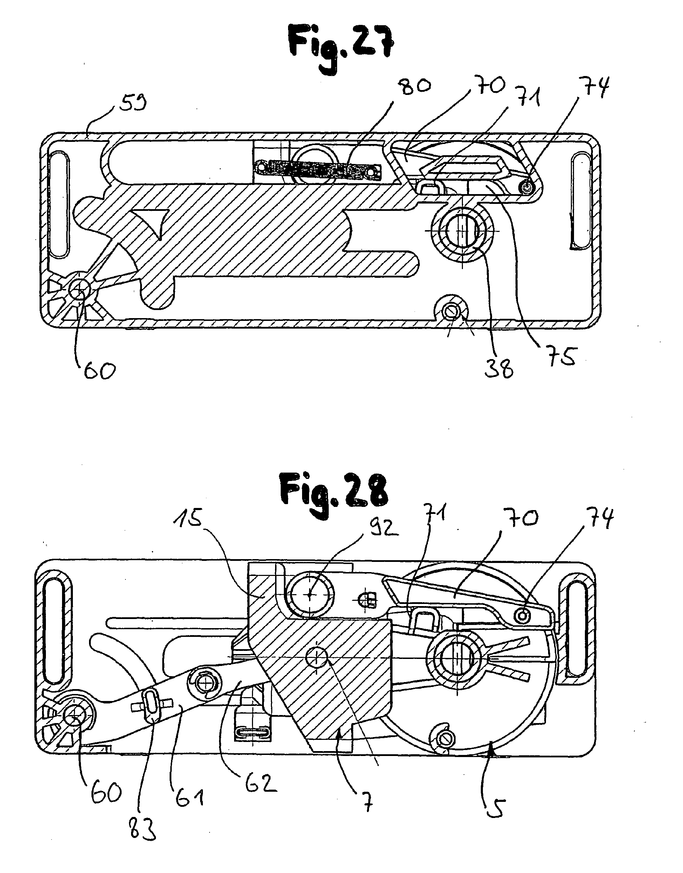

Die Figuren 26 bis 28 zeigen nochmals einige konstruktive Details der Vorrichtung 1 gemäss dem zweiten Ausführungsbeispiel. Ersichtlicherweise ist Fig. 26 eine vergrösserte Darstellung des Schnitts gemäss Fig. 19c. Die Figuren 27 und 28 zeigen insbesondere die schwenkbare Lagerung des Zugglieds 70 am Schlitten 15. Die Schwenkachse 92 ist in Fig. 28 angedeutet. Aus Fig. 27 ist erkennbar, dass das Federelement 80 für das Zugglied in einer Längsnut zur Sicherstellung von dessen Bewegungsfreiheit angeordnet ist.

Auch in der vorgängig gezeigten Schliessposition gemäss Fig. 19a, in welcher der Kapselhalter und das Verschlussteil sich in der Schliessstellung befinden, kann es notwendig sein, wenn zur Bildung der Extraktionskammer diese Kammerteile zusätzlich dichtend gegeneinander gepresst werden. Eine solche zusätzliche Pressung kann mit Hilfe eines hydraulischen Systems erfolgen. Eine erste Ausführungsform eines derartigen Systems ist schematisch in Fig. 29 gezeigt (dieses System ist auch in der Vorrichtung z.B. gemäss Figur 29 verwirklicht). Das Verschlussteil 7 (bzw. eigentlich nur der Injektorkolben, vgl. Fig. 25) kann mit Hilfe einer Kolbenanordnung 94 hydraulisch gegen den Kapselhalter gepresst werden. Gespeist wird die Kolbenanordnung durch eine mit 90 bezeichnete Druckwasserquelle. Im vorliegenden Ausführungsbeispiel ist die Druckwasserquelle identisch mit der Speisewasserquelle (angedeutet beispielsweise durch einen Wassertank 21).

In der Praxis hat sich jedoch gezeigt, dass es vorteilhaft sein kann, wenn das Brühsystem zum Extrahieren des Extraktionsguts einerseits und das Hydrauliksystem zum Herstellen der dichten Extraktionskammer voneinander getrennt ausgebildet sind. Eine solche Anordnung mit voneinander getrennten Systemen ist in Fig. 30 dargestellt. Die Systeme können beispielsweise dadurch getrennt werden, dass sie separate Wasseranschlüsse aufweisen. Es wäre sogar vorstellbar, dass jedes System jeweils einen Wassertank aufweist.

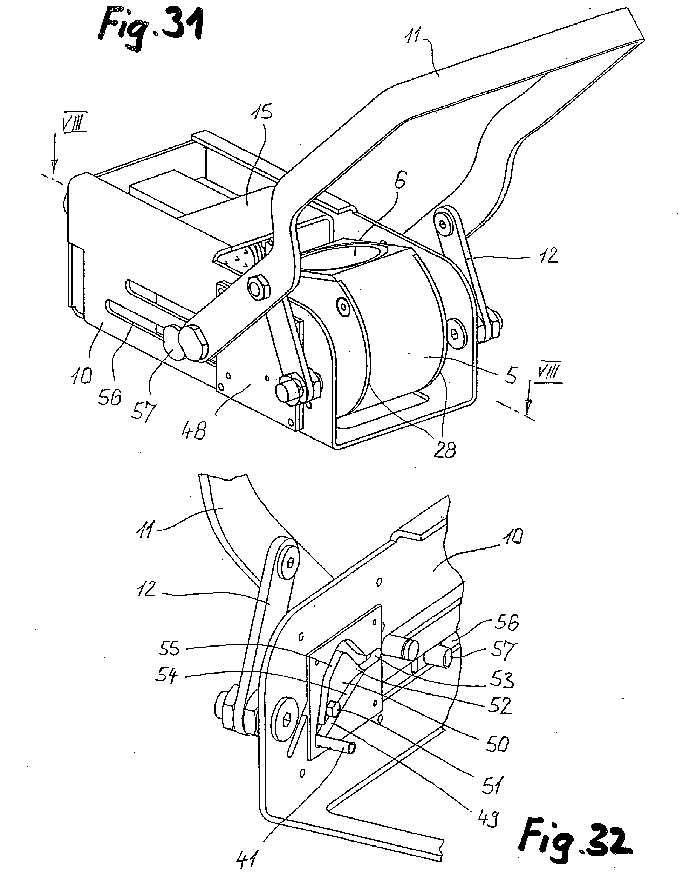

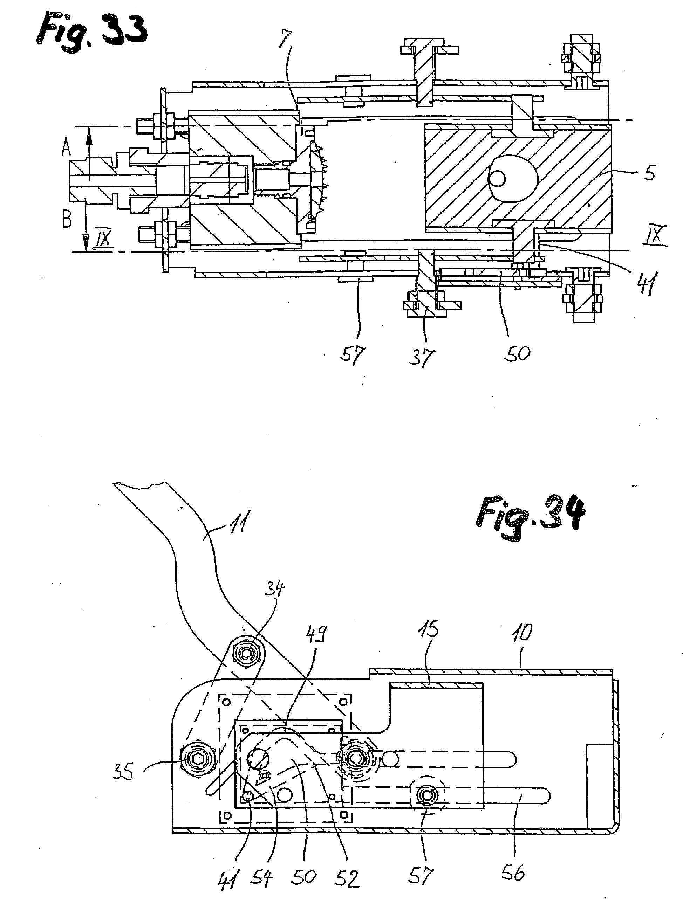

Die Figuren 31 bis 38 zeigen eine alternative Vorrichtung, bei welcher der Kapselhalter 5 am Schlitten 15 gegen das feststehende Verschlussteil verschiebbar ist. Die Schwenkbewegung des Kapselhalters wird ersichtlicherweise durch eine geschlossene Steuerkurve gesteuert, wobei jeder Schlittenbewegung eine separate Steuerbahn zugeordnet ist. Die nachfolgend beschriebene Ausgestaltung der Steuerkurve könnte auch bei der Vorrichtung gemäss dem zweiten Ausführungsbeispiel eingesetzt werden. Gemäss den Fig. 31 und 32 wird dies mit Hilfe einer Steuerplatte 48 erreicht, die auf einer Seite am Support 10 angeordnet ist und die auf der Innenseite eine geschlossene Steuerbahn 49 aufweist. Die Innenseite dieser geschlossenen Steuerbahn wird durch eine Steuerweiche 50 gebildet, die über eine Weichenspitze 52 verfügt und die um ein Bolzengelenk 51 unter Federvorspannung derart schwenkbar gelagert ist, dass die Weichenspitze 52 den unteren Bahnabschnitt 54 immer verschliesst. Der obere Bahnabschnitt 55 vereint sich mit dem unteren Bahnabschnitt 54 zu einem geraden Abschnitt 53. Der am Kapselhalter 5 angeordnete Steuerbolzen 41 greift im Verlaufe der Hin- und Herbewegung des Schlittens 15 die gesamte Steuerbahn 49 ab. In den Figuren 33 und 34 ist die Aufnahmestellung A dargestellt. Der Schlitten 15 steht dabei in seiner Ausgangsstellung, welche er einnimmt, bevor der Schwenkhebel 11 betätigt wird. Der Steuerbolzen 41 steht in seiner Grundposition, an der sich der untere Bahnabschnitt 54 und der obere Bahnabschnitt 55 vereinen. In der Abbildung gemäss Fig. 34 ist die Steuerweiche 50 im Uhrzeigersinn vorgespannt. Beim Niederdrücken des Schwenkhebels 11 fährt der Steuerbolzen 41 den unteren Bahnabschnitt 54 ab und überfährt dabei die geschlossene Weiche an der Weichenspitze 52, so dass er in den geraden Abschnitt 53 eindringt.

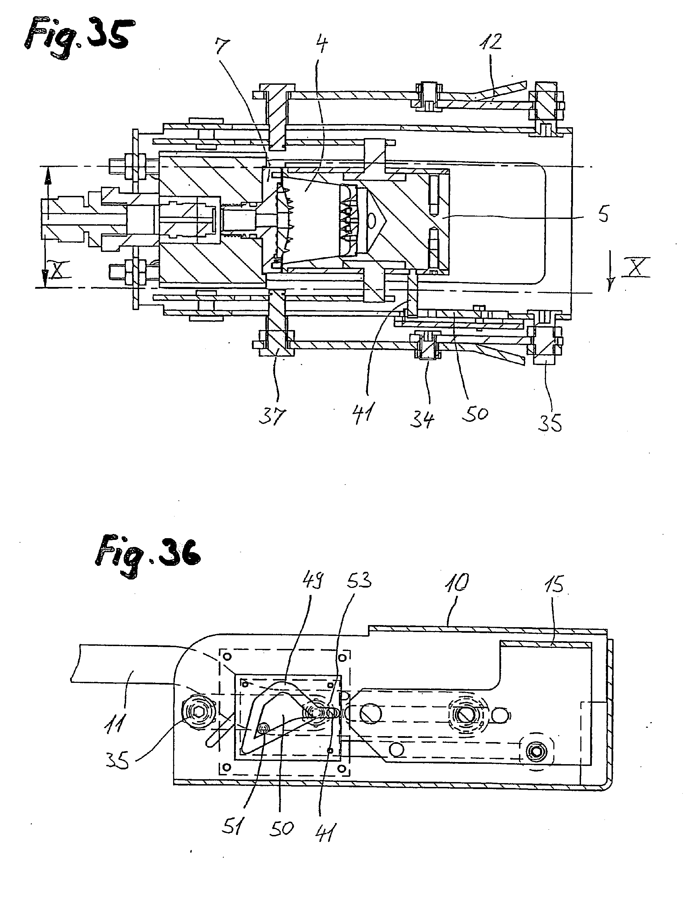

Diese Position ist in den Figuren 35 und 36 dargestellt. Diese Figuren zeigen die Schliessstellung B mit vollständig vorgezogenem Schlitten und mit geschlossener Extraktionskammer 4. Der Steuerbolzen 41 steht am Ende des geraden Abschnitts 53.

Beim Hochschwenken des Schwenkhebels 11 fährt der Steuerbolzen 41 im geraden Abschnitt 53 wieder zurück bis zur Weichenspitze 52 und wird dort in den oberen Bahnabschnitt 55 umgelenkt.

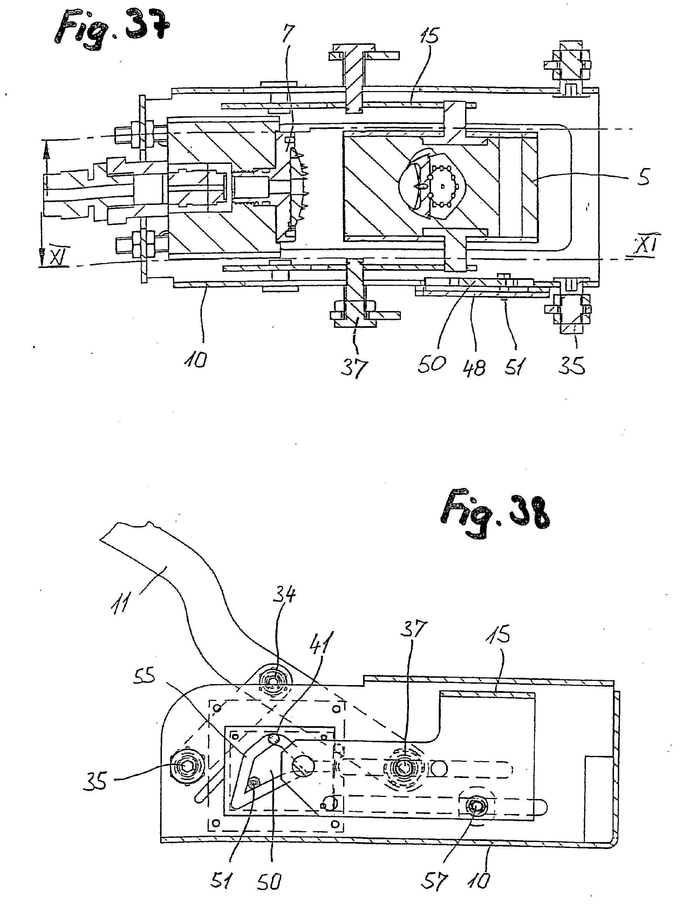

Die Figuren 37 und 38 zeigen die Auswurfstellung C mit dem Steuerbolzen 41 im Zenit des oberen Bahnabschnitts 55. Bis zum Erreichen dieser Position wird der Kapselhalter 5 im gleichen Drehsinn weitergedreht, bis er die maximale Auswurfstellung erreicht. Bei der weiteren Schwenkbewegung des Schwenkhebels 11 nach oben reversiert der Kapselhalter 5 seine Drehbewegung, bis der Steuerbolzen 41 wieder seine Ausgangslage erreicht hat.

Gut sichtbar ist hier übrigens auch, dass der Kapselhalter 5 beispielsweise aus Kunststoffmaterial zwischen zwei Seitenwangen 28 beispielsweise aus Metall eingespannt ist. Ebenfalls gut erkennbar ist sodann die Schlittenführung 56, die sich parallel zur Geradeführung 36 für den Führungsbolzen 37 erstreckt und in welcher ein Schlittenführungsbolzen 57 geführt ist. Damit wird eine präzise Führung des Schlittens 15 gewährleistet.

Schlittenkonstruktion und Hebelgetriebe beim Ausführungsbeispiel gemäss Fig. 31 betreffen zwar eine Vorrichtung mit schwenkbarem und verschiebbarem Kapselhalter. Einem Fachmann ist jedoch klar, dass die anhand der Figuren 31 bis 38 beschriebene Kurvensteuerung grundsätzlich auch für die Vorrichtung gemäss Fig. 11 verwendet werden könnte. Das schwenkbar und unter Vorspannung gelagerte Rückführmittel bzw. Zugglied 70 (vgl. z.B. Fig. 27) müsste lediglich durch eine Weichenanordnung mit einer ähnlichen Steuerweiche 50 ersetzt werden.

## Patentansprüche

1. Vorrichtung (1) zum Extrahieren eines in einer Kapsel (3) enthaltenen Extraktionsgutes mit einem flüssigen Extraktionsmittel, bestehend aus zwei zur Bildung einer Extraktionskammer (4) dichtend gegeneinander pressbaren Kammerteilen, sowie mit Mitteln zum Penetrieren der Kapsel und zum Durchleiten des Extraktionsmittels durch die geschlossene Extraktionskammer, wobei ein Kammerteil als Kapselhalter (5) mit einer Kavität (6) zur Aufnahme einer Kapsel (3) und das andere Kammerteil als Verschlussteil (7) zum Verschliessen der Kavität ausgebildet ist, wobei der Kapselhalter (5) über ein manuell oder motorisch antreibbares Getriebe in dieser Reihenfolge zwischen einer
- Aufnahmestellung (A) zur Aufnahme der Kapsel (3),
- Schliessstellung (B) zum Verschliessen der Kavität (6),
- Auswurfstellung (C) zum Auswerfen der Kapsel (3),
- und zurück in die Aufnahmestellung (A)
schwenkbar ist, wobei der Kapselhalter (5) zwischen der Aufnahmestellung (A) und der Auswurfstellung (C) um einen Schwenkwinkel α von mehr als 90° schwenkbar ist, **dadurch gekennzeichnet dass** der Kapselhalter (5) nur schwenkbar und das Verschlussteil (7) nur entlang einer Längsachse verschiebbar gelagert ist und dass das Verschlussteil zwischen der Aufnahmestellung (A) und der Schliessstellung (B) gegen den Kapselhalter in Schliessrichtung (e) und zwischen der Schliessstellung (B) und der Auswurfstellung (C) vom Kapselhalter in einer zur Schliessrichtung entgegengesetzten Öffnungsrichtung (-e), insbesondere linear verschiebbar ist.

2. Vorrichtung nach Anspruch 1, **dadurch gekennzeichnet, dass** der Kapselhalter (5) und das Verschlussteil (7) in einem Support (10) gelagert sind, und dass die Schliessbewegung und die Öffnungsbewegung zwischen den beiden Teilen bzw. die Schwenkbewegung des Kapselhalters über einen am Support angeordneten Betätigungshebel (11) ausführbar sind.

3. Vorrichtung nach Anspruch 2, **dadurch gekennzeichnet, dass** der Betätigungshebel (11) ein Schwenkhebel ist, der am Support (10) angelenkt ist und der über eine Koppelanordnung (12, 61, 62) in Wirkverbindung steht mit einem geführten Schlitten (15), an dem das Verschlussteil (7) angeordnet ist.

4. Vorrichtung nach einem der Ansprüche 1 bis 3, **dadurch gekennzeichnet, dass** der Kapselhalter (5) mittels eines Federelements (43) in die Aufnahmestellung (A) vorgespannt ist.

5. Vorrichtung nach Anspruch 4, **dadurch gekennzeichnet, dass** das Federelement (43) eine Schenkelfeder ist.

6. Vorrichtung nach Anspruch 4 oder 5, **dadurch gekennzeichnet, dass** in einer Lagerung des Kapselhalters (5) im Support (10) ein Dämpfungselement (81) zur Dämpfung der Rückführbewegung des Kapselhalters in die Aufnahmestellung (A) infolge der Vorspannung vorgesehen ist.

7. Vorrichtung nach einem der Ansprüche 1 bis 6, **dadurch gekennzeichnet, dass** dem Verschlussteil (7) ein Schubelement, insbesondere ein Stössel (63) zugeordnet ist, das bei einer Verschiebung des Verschlussteils in Schliessrichtung (e) derart mit einem am Kapselhalter angeordneten ersten Anschlagelement (64) zusammenwirkt, dass der Kapselhalter (5) von der Aufnahmestellung (A) in die Schliessstellung (B) schwenkbar ist.

8. Vorrichtung nach Anspruch 7, **dadurch gekennzeichnet, dass** das Schubelement (63) und das erste Anschlagelement (64) derart ausgebildet sind, dass nach Erreichen der Schliessstellung des Kapselhalters (5) bei fortgesetzter Verschiebung des Verschlussteils in Schliessrichtung (e) insbesondere bis zum Erreichen einer Brühstellung das erste Anschlagelement (64) von der schiebenden Beaufschlagung durch das Schubelement (63) befreit ist.

9. Vorrichtung nach Anspruch 7 oder 8, **dadurch gekennzeichnet, dass** das Schubelement (63) einen vorzugsweise in der Längsachse sich erstreckenden Gleitabschnitt (66) aufweist, der eine Gleitfläche für das erste Anschlagelement (64) bei der fortgesetzten Verschiebung des Verschlussteils in Schliessrichtung (e) bildet.

10. Vorrichtung nach einem der Ansprüche 8 oder 9, **dadurch gekennzeichnet, dass** dem Verschlussteil (7) zum Fixieren der Schliessstellung des Kapselhalters (5) bei der fortgesetzten Verschiebung des Verschlussteils in Schliessrichtung (e) ein Positionierteil (67) zugeordnet ist, das einen Anschlag für eine am Kapselhalter angeordneten Positioniernase (68) bildet.

11. Vorrichtung nach einem der Ansprüche 1 bis 10, **dadurch gekennzeichnet, dass** zum Festlegen der Aufnahmestellung (A) und der Schliessstellung (B) am Support (10) Anschlagmittel (99) vorgesehen sind.

12. Vorrichtung nach einem der Ansprüche 1 bis 11, **dadurch gekennzeichnet, dass** dem Verschlussteil (7) ein Rückführmittel, insbesondere ein Zugglied (70) zugeordnet ist, das bei einer Verschiebung des Verschlussteils in Öffnungsrichtung (e) derart mit einem am Kapselhalter angeordnetes zweiten Anschlagelement (71) zusammenwirkt, dass der Kapselhalter (5) von der Schliessstellung (B) in die Auswurfstellung (C) schwenkbar ist.

13. Vorrichtung nach Anspruch 12, **dadurch gekennzeichnet, dass** das Rückführmittel (70) eine Auflaufflanke (72) aufweist, die zum Schwenken des Kapselhalters von der Schliessstellung (B) in die Auswurfstellung (C) einen Anschlag für das zweite Anschlagelement (71) bildet.

14. Vorrichtung nach Anspruch 12 oder 13, **dadurch gekennzeichnet, dass** das Rückführmittel (70) und das zweite Anschlagelement (71) derart ausgebildet sind, dass nach-Erreichen der Auswurfstellung des Kapselhalters (5) bei einer fortgesetzten Verschiebung des Verschlussteils in Öffnungsrichtung (-e) das zweite Anschlagelement (71) von der Beaufschlagung durch das Rückführmittel (70) freigegeben werden kann, wodurch der Kapselhalter (5) von der Auswurfstellung (C) in die Aufnahmestellung (A) in die Gegendrehrichtung (-d) zur Schliessdrehrichtung (d) schwenkbar ist.

15. Vorrichtung nach Anspruch 13 oder 14, **dadurch gekennzeichnet, dass** das Rückführmittel (70) eine der Auflaufflanke (72) vorgelagerte Positionierflanke (73) zum Fixieren der Schliessstellung des Kapselhalters (5) bei einer ersten Verschiebung des Verschlussteils in Öffnungsrichtung (-e) vor Beginn der Schwenkbewegung zum Erreichen der Auswerfstellung aufweist, welche einen Anschlag für das das zweite Anschlagelement (71) bildet.

16. Vorrichtung nach einem der Ansprüche 12 bis 15, **dadurch gekennzeichnet, dass** das Rückführmittel (70) schwenkbar am Verschlussteil (7) ist und dass es über ein Eingriffsglied (74) zum Abfahren einer Kurvensteuerung steuerbar ist.

17. Vorrichtung nach einem der Ansprüche 1 bis 16, **dadurch gekennzeichnet, dass** die Schwenkbewegung des Kapselhalters (5), insbesondere die Schwenkbewegungen des Kapselhalters von der Schliessstellung (B) zur Auswurfstellung (C) und zurück in die Aufnahmestellung (A), über eine Kurvensteuerung steuerbar ist.

18. Vorrichtung nach einem der Ansprüche 12 bis 17, **dadurch gekennzeichnet, dass** eine Kurvensteuerung für das Rückführmittel (70) vorgesehen ist, die durch eine geschlossene Steuerbahn (75) gebildet ist, wobei die Steuerbahn einen in Längsrichtung verlaufenden unteren und einen oberen Längsbahnabschnitt (76, 77) und die Längsbahnabschnitte verbindenden Querbahnabschnitte (78, 79) aufweist, wobei der Kapselhalter (5) nur bei Abfahren des unteren Längsbahnabschnitts (77) durch das Rückführmittel beaufschlagbar ist und wobei bei Erreichen des an den unteren Längsbahnabschnitt (77) anschliessenden Querbahnabschnitts (79) das zweite Anschlagelement (71) von der Beaufschlagung durch das Rückführmittel (70) freigegeben wird, wodurch der Kapselhalter (5) von der Auswurfstellung in Gegendrehrichtung (-d) in die Aufnahmestellung (A) schwenkbar ist.

19. Vorrichtung nach Anspruch 18, **dadurch gekennzeichnet, dass** das Rückführmittel (70) mittels einer Federanordnung in Richtung des oberen Längsbahnabschnitts (76) vorgespannt ist.

20. Vorrichtung nach Anspruch 17, **dadurch gekennzeichnet, dass** die Kurvensteuerung eine geschlossene Steuerbahn (49) mit wenigstens zwei Bahnabschnitten (54, 55) aufweist, wobei mittels einer Steuerweiche (50) beim Schliessen bzw. beim Öffnen der Extraktionskammer (4) unterschiedliche Bahnabschnitte abgreifbar sind.

21. Vorrichtung nach einem der Ansprüche 1 bis 20, **dadurch gekennzeichnet, dass** der Kapselhalter (5) als Scheibe aus Kunststoffmaterial ausgebildet ist, wobei sich die Kavität (6) gegen den Aussenmantel der Scheibe öffnet.

22. Vorrichtung nach einem der Ansprüche 1 bis 21, **dadurch gekennzeichnet, dass** ein Hydrauliksystem mit einer Druckwasserquelle (90) vorgesehen ist, wodurch nach Erreichen der Schliessstellung des Kapselhalters (5) und des Verschlussteils (7) die Kammerteile zum Erreichen der Brühstellung zur Bildung der Extraktionskammer (4) dichtend gegeneinander pressbar sind.

23. Vorrichtung nach Anspruch 22, **dadurch gekennzeichnet, dass** das Hydrauliksystem zur Bildung einer dichten Extraktionskammer und ein Brühwassersystem zur Bereitstellung des Extraktionsmittels, voneinander getrennt ausgebildet sind.

24. Vorrichtung nach einem der Ansprüche 1 bis 23, **dadurch gekennzeichnet, dass** am Verschlussteil (7) Hilfsmittel (85) zum Entfernen der Kapsel (3) aus der Kavität (6) bei der Verschiebung des Verschlussteils in Öffnungsrichtung (e) zugeordnet sind.

25. Vorrichtung nach Anspruch 24, **dadurch gekennzeichnet, dass** das Hilfsmittel ein Greifelement (85) mit einer Hinterschneidung (87) ist, wobei das Greifelement (85) beim Verschieben des Verschlussteils (7) in Schliessrichtung (e) einen Kragen (86) einer in der Kavität eingesetzten Kapsel (3) überfahren kann und die Hinterschneidung (87) für den Auswurfvorgang einen Anschlag für den Kragen (86) der Kapsel (3) bildet.

26. Vorrichtung nach Anspruch 2 und einem der Ansprüche 3 bis 25, **dadurch gekennzeichnet, dass** der Support (10) aus zwei Supporthälften (58, 59) zusammensetzbar ist, deren Teilungsebene senkrecht zur Schwenkachse des Kapselhalters (5) verläuft und wobei bevorzugt die Teilungsebene weiterhin durch die Längsachse verläuft.

## Claims

1. Device (1) for extracting an extraction substance contained in a capsule (3) using a liquid extraction medium, comprising two chamber parts which can be pressed fluid-tight one against the other to form an extraction chamber (4), and having means for penetrating the capsule and for passing the extraction medium through the closed extraction chamber, one chamber part being formed as a capsule holder (5) with a cavity (6) for receiving a capsule (3) and the other chamber part being formed as a closure part (7) for closing the cavity, wherein the capsule holder (5) can be pivoted via a manually driven or motor-driven mechanism between
- a receiving position (A) for receiving the capsule (3),
- a closing position (B) for closing the cavity (6),
- an ejection position (C) for ejecting the capsule (3),
- and back into the receiving position (A)
in that order, the capsule holder (5) being able to pivot through a pivot angle α of more than 90° between the receiving position (A) and the ejection position (C), **characterized in that** the capsule holder (5) is mounted so that it can only pivot and the closure part (7) is mounted so that it can only be displaced along a longitudinal axis, and **in that**, between the receiving position (A) and the closing position (B), the closure part can be displaced, in particular linearly toward the capsule holder in the closing direction (e) and, between the closing position (B) and the ejection position (C), from the capsule holder in an opening direction (-e) opposed to the closing direction.

2. Device according to Claim 1, **characterized in that** the capsule holder (5) and the closure part (7) are mounted in a support (10), and **in that** the closing movement and the opening movement between the two parts and/or the pivoting movement of the capsule holder can be brought about via an actuating lever (11) arranged on the support.

3. Device according to Claim 2, **characterized in that** the actuating lever (11) is a pivoting lever which is articulated on the support (10) and which is operatively connected via a coupling arrangement (12, 61, 62) to a guided carriage (15) on which the closure part (7) is arranged.

4. Device according to one of Claims 1 to 3, **characterized in that** the capsule holder (5) is preloaded into the receiving position (A) by means of a spring element (43).

5. Device according to Claim 4, **characterized in that** the spring element (43) is a leg spring.

6. Device according to Claim 4 or 5, **characterized in that** a damping element (81) for damping the return movement of the capsule holder into the receiving position (A) resulting from the preloading is provided in a bearing of the capsule holder (5) in the support (10).

7. Device according to one of Claims 1 to 6, **characterized in that** the closure part (7) is assigned a push element, in particular a ram (63), which, during a displacement of the closure part in the closing direction (e), interacts with a first abutment element (64) arranged on the capsule holder in such a way that the capsule holder (5) can be pivoted from the receiving position (A) into the closing position (B).

8. Device according to Claim 7, **characterized in that** the push element (63) and the first abutment element (64) are designed in such a way that, after reaching the closing position of the capsule holder (5) and during the continued displacement of the closure part in the closing direction (e), in particular up until reaching a brewing position, the first abutment element (64) is freed from the pushing action of the push element (63).

9. Device according to Claim 7 or 8, **characterized in that** the push element (63) has a sliding section (66), preferably extending in the longitudinal axis, which forms a sliding surface for the first abutment element (64) during the continued displacement of the closure part in the closing direction (e).

10. Device according to either of Claims 8 and 9, **characterized in that** the closure part (7) is assigned a positioning part (67) for fixing the closing position of the capsule holder (5) during the continued displacement of the closure part in the closing direction (e), this positioning part forming an abutment for a positioning lug (68) arranged on the capsule holder.

11. Device according to one of Claims 1 to 10, **characterized in that** abutment means (99) are provided on the support (10) to fix the receiving position (A) and the closing position (B).

12. Device according to one of Claims 1 to 11, **characterized in that** the closure part (7) is assigned a return means, in particular a pulling member (70), which, during a displacement of the closure part in the opening direction (e), interacts with a second abutment element (71) arranged on the capsule holder in such a way that the capsule holder (5) can be pivoted from the closing position (B) into the ejection position (C) .

13. Device according to Claim 12, **characterized in that** the return means (70) has a run-on flank (72) which forms an abutment for the second abutment element (71) in order to pivot the capsule holder from the closing position (B) into the ejection position (C).

14. Device according to Claim 12 or 13, **characterized in that** the return means (70) and the second abutment element (71) are designed in such a way that, after reaching the ejection position of the capsule holder (5) and during a continued displacement of the closure part in the opening direction (-e), the second abutment element (71) can be released from the action of the return means (70), whereby the capsule holder (5) can be pivoted from the ejection position (C) into the receiving position (A) in the opposite direction of rotation (-d) to the closing direction of rotation (d).

15. Device according to Claim 13 or 14, **characterized in that** the return means (70) has a positioning flank (73) upstream of the run-on flank (72) for fixing the closing position of the capsule holder (5) during a first displacement of the closure part in the opening direction (-e) before the start of the pivoting movement to reach the ejection position, this positioning flank forming an abutment for the second abutment element (71).

16. Device according to one of Claims 12 to 15, **characterized in that** the return means (70) is able to pivot on the closure part (7) and **in that** it can be controlled via an engagement member (74) to travel along a curved control circuit.

17. Device according to one of Claims 1 to 16, **characterized in that** the pivoting movement of the capsule holder (5), in particular the pivoting movements of the capsule holder from the closing position (B) to the ejection position (C) and back into the receiving position (A), can be controlled via a curved control circuit.

18. Device according to one of Claims 12 to 17, **characterized in that** a curved control circuit is provided for the return means (70), this circuit being formed by a closed control track (75), the control track having lower and upper longitudinal track sections (76, 77) extending in the longitudinal direction and transverse track sections (78, 79) connecting the longitudinal track sections, the capsule holder (5) being able to be acted upon by the return means only when the latter is traveling along the lower longitudinal track section (77) and, on reaching the transverse track section (79) adjoining the lower longitudinal track section (77), the second abutment element (71) is released from the action of the return means (70), whereby the capsule holder (5) can be pivoted from the ejection position into the receiving position (A) in the opposite direction of rotation (-d).

19. Device according to Claim 18, **characterized in that** the return means (70) is preloaded by means of a spring arrangement in the direction of the upper longitudinal track section (76).

20. Device according to Claim 17, **characterized in that** the curved control circuit comprises a closed control track (49) having at least two track sections (54, 55), it being possible by means of a control switch (50) for different track sections to be traced during the closing or during the opening of the extraction chamber (4).

21. Device according to one of Claims 1 to 20, **characterized in that** the capsule holder (5) is formed as a disk of plastic material, the cavity (6) opening toward the outer casing of the disk.

22. Device according to one of Claims 1 to 21, **characterized in that** a hydraulic system with a pressurized water source (90) is provided, whereby, after reaching the closing position of the capsule holder (5) and of the closure part (7), the chamber parts can be pressed fluid-tight one against the other to form the extraction chamber (4) so as to achieve the brewing position.

23. Device according to Claim 22, **characterized in that** the hydraulic system for forming a fluid-tight extraction chamber and a brewing water system for providing the extraction medium are formed separately from one another.

24. Device according to one of Claims 1 to 23, **characterized in that** the closure part (7) is assigned auxiliary means (85) for removing the capsule (3) from the cavity (6) during the displacement of the closure part in the opening direction (e).

25. Device according to Claim 24, **characterized in that** the auxiliary means is a gripping element (85) having an undercut (87), the gripping element (85), during the displacement of the closure part (7) in the closing direction (e), being able to pass over a collar (86) of a capsule (3) inserted in the cavity, and for the ejection process the undercut (87) forming an abutment for the collar (86) of the capsule (3).

26. Device according to Claim 2 and one of Claims 3 to 25, **characterized in that** the support (10) can be composed of two supports halves (58, 59) whose parting plane extends perpendicularly to the pivot axis of the capsule holder (5), the parting plane preferably also extending through the longitudinal axis.

## Revendications

1. Dispositif (1) pour extraire un produit d'extraction contenu dans une capsule (3) avec un agent d'extraction liquide, constitué de deux parties de chambre pouvant être pressées hermétiquement l'une contre l'autre pour former une chambre d'extraction (4), ainsi qu'avec des moyens pour percer la capsule et pour guider l'agent d'extraction à travers la chambre d'extraction fermée, une partie de chambre étant réalisée sous forme de support de capsule (5) avec une cavité (6) pour recevoir une capsule (3) et l'autre partie de chambre étant réalisée sous forme de partie de fermeture (7) pour fermer la cavité, le support de capsule (5) pouvant pivoter par le biais d'un mécanisme pouvant être entraîné manuellement ou par moteur dans cette succession, entre
- une position de réception (A) pour recevoir la capsule (3),
- une position de fermeture (B) pour fermer la cavité (6),
- une position d'éjection (C) pour éjecter la capsule (3),
- et à nouveau de retour dans une position de réception (A),
le support de capsule (5) pouvant pivoter entre la position de réception (A) et la position d'éjection (C) suivant un angle de pivotement α supérieur à 90°,
**caractérisé en ce que** le support de capsule (5) est monté de manière à seulement pouvoir pivoter et la partie de fermeture (7) est montée de manière à seulement pouvoir être déplacée le long d'un axe longitudinal, et **en ce que** la partie de fermeture peut être déplacée, notamment de manière linéaire, entre la position de réception (A) et la position de fermeture (B) vers le support de capsule dans la direction de fermeture (e) et entre la position de fermeture (B) et la position d'éjection (C) depuis le support de capsule dans une direction d'ouverture (-e) opposée à la direction de fermeture.

2. Dispositif selon la revendication 1, **caractérisé en ce que** le support de capsule (5) et la partie de fermeture (7) sont montés dans un support (10) et **en ce que** le mouvement de fermeture et le mouvement d'ouverture entre les deux parties ou le mouvement de pivotement du support de capsule peuvent s'effectuer par le biais d'un levier d'actionnement (11) disposé sur le support.

3. Dispositif selon la revendication 2, **caractérisé en ce que** le levier d'actionnement (11) est un levier pivotant qui est articulé sur le support (10) et qui est en liaison fonctionnelle par le biais d'un agencement de bielle (12, 61, 62) avec un chariot guidé (15), sur lequel est disposée la partie de fermeture (7).

4. Dispositif selon l'une quelconque des revendications 1 à 3, **caractérisé en ce que** le support de capsule (5) est précontraint au moyen d'un élément de ressort (43) dans la position de réception (A).

5. Dispositif selon la revendication 4, **caractérisé en ce que** l'élément de ressort (43) est un ressort à branches.

6. Dispositif selon la revendication 4 ou 5, **caractérisé en ce que**, dans un appui du support de capsule (5) dans le support (10), est prévu un élément d'amortissement (81) pour amortir le mouvement de retour du support de capsule dans la position de réception (A) suite à la précontrainte.

7. Dispositif selon l'une quelconque des revendications 1 à 6, **caractérisé en ce que** l'on associe à la partie de fermeture (7) un élément de poussée, notamment un poussoir (63), qui dans le cas d'un déplacement de la partie de fermeture dans la direction de fermeture (e), coopère avec un premier élément de butée (64) disposé sur le support de capsule, de telle sorte que le support de capsule (5) peut pivoter de la position de réception (A) dans la position de fermeture (B).

8. Dispositif selon la revendication 7, **caractérisé en ce que** l'élément de poussée (63) et le premier élément de butée (64) sont réalisés de telle sorte qu'après que le support de capsule (5) a atteint la position de fermeture en cas de poursuite du déplacement de la partie de fermeture dans la direction de fermeture (e), en particulier une fois qu'il a atteint une position de mouture, le premier élément de butée (64) n'est plus sollicité en déplacement de poussée par l'élément de poussée (63) .

9. Dispositif selon la revendication 7 ou 8, **caractérisé en ce que** l'élément de poussée (63) présente une portion de glissement (66) s'étendant de préférence suivant l'axe longitudinal, qui forme une surface de glissement pour le premier élément de butée (64) lors de la poursuite du déplacement de la partie de fermeture dans la direction de fermeture (e).

10. Dispositif selon l'une quelconque des revendications 8 ou 9, **caractérisé en ce que** l'on associe à la partie de fermeture (7), pour fixer la position de fermeture du support de capsule (5) lors de la poursuite du déplacement de la partie de fermeture dans la direction de fermeture (e), une partie de positionnement (67) qui forme une butée pour un ergot de positionnement (68) disposé sur le support de capsule.

11. Dispositif selon l'une quelconque des revendications 1 à 10, **caractérisé en ce que** pour la fixation de la position de réception (A) et de la position de fermeture (B) sur le support (10), on prévoit des moyens (99).

12. Dispositif selon l'une quelconque des revendications 1 à 11, **caractérisé en ce que** l'on associe à la partie de fermeture (7) un moyen de retour, notamment un organe de traction (70), qui, dans le cas d'un déplacement de la partie de fermeture dans la direction d'ouverture (-e), coopère avec un deuxième élément de butée (71) disposé sur le support de capsule de telle sorte que le support de capsule (5) puisse pivoter de la position de fermeture (B) dans la position d'éjection (C).

13. Dispositif selon la revendication 12, **caractérisé en ce que** le moyen de retour (70) présente un flanc de montée (72) qui, pour le pivotement du support de capsule de la position de fermeture (B) dans la position d'éjection (C), forme une butée pour le deuxième élément de butée (71).

14. Dispositif selon la revendication 12 ou 13, **caractérisé en ce que** le moyen de retour (70) et le deuxième élément de butée (71) sont réalisés de telle sorte qu'après que le support de capsule (5) a atteint la position d'éjection lors de la poursuite du déplacement de la partie de fermeture dans la direction d'ouverture (-e), le deuxième élément de butée (71) puisse être libéré de la sollicitation par le moyen de retour (70), de sorte que le support de capsule (5) puisse pivoter de la position d'éjection (C) dans la position de réception (A) dans le sens de rotation inverse (-d) par rapport au sens de rotation de fermeture (d).

15. Dispositif selon la revendication 13 ou 14, **caractérisé en ce que** le moyen de retour (70) présente un flanc de positionnement (73) monté avant le flanc de montée (72) pour la fixation de la position de fermeture du support de capsule (5) dans le cas d'un premier déplacement de la partie de fermeture dans la direction d'ouverture (-e) avant le début du mouvement de pivotement pour atteindre la position d'éjection, ce flanc de positionnement formant une butée pour le deuxième élément de butée (71).

16. Dispositif selon l'une quelconque des revendications 12 à 15, **caractérisé en ce que** le moyen de retour (70) peut pivoter sur la partie de fermeture (7) et **en ce qu'**il peut être commandé par le biais d'un organe d'engagement (74) pour arrêter une commande de came.

17. Dispositif selon l'une quelconque des revendications 1 à 16, **caractérisé en ce que** le mouvement de pivotement du support de capsule (5), en particulier les mouvements de pivotement du support de capsule de la position de fermeture (B) dans la position d'éjection (C) et de nouveau dans la position de réception (A), peuvent être commandés par le biais d'une commande de came.

18. Dispositif selon l'une quelconque des revendications 12 à 17, **caractérisé en ce qu'**une commande de came pour le moyen de retour (70) est prévue, laquelle est formée par une piste de commande fermée (75), la piste de commande présentant une portion de piste longitudinale inférieure et une portion de piste longitudinale supérieure (76, 77) s'étendant dans la direction longitudinale et des portions de piste transversales (78, 79) reliant les portions de piste longitudinales, le support de capsule (5) n'étant sollicité par le moyen de retour qu'à l'arrêt de la portion de piste longitudinale inférieure (77), et une fois atteinte la portion de bande transversale (79) se raccordant à la portion de piste longitudinale inférieure (77), le deuxième élément de butée (71) est libéré de la sollicitation par le moyen de retour (70), de sorte que le support de capsule (5) puisse pivoter de la position d'éjection dans la direction de rotation inverse (-d) dans la position de réception (A).

19. Dispositif selon la revendication 18, **caractérisé en ce que** le moyen de retour (70) est précontraint au moyen d'un agencement de ressort dans la direction de la portion de piste longitudinale supérieure (76).

20. Dispositif selon la revendication 17, **caractérisé en ce que** la commande de came présente une piste de commande fermée (49) comprenant au moins deux portions de piste (54, 55), différentes portions de piste pouvant être saisies au moyen d'une aiguille de commande (50) lors de la fermeture ou de l'ouverture de la chambre d'extraction (4).

21. Dispositif selon l'une quelconque des revendications 1 à 20, **caractérisé en ce que** le support de capsule (5) est réalisé sous forme de disque en matériau plastique, la cavité (6) s'ouvrant vers l'enveloppe extérieure du disque.

22. Dispositif selon l'une quelconque des revendications 1 à 21, **caractérisé en ce qu'**un système hydraulique est prévu avec une source d'eau sous pression (90), de sorte que lorsque le support de capsule (5) et la partie de fermeture (7) ont atteint la position de fermeture, les parties de chambre peuvent être pressées l'une contre l'autre pour atteindre la position de mouture pour former la chambre d'extraction (4).

23. Dispositif selon la revendication 22, **caractérisé en ce que** le système hydraulique pour former une chambre d'extraction étanche, et un système d'eau de mouture pour fournir l'agent d'extraction, sont réalisés de manière séparée l'un de l'autre.

24. Dispositif selon l'une quelconque des revendications 1 à 23, **caractérisé en ce que** des moyens auxiliaires (85) sont associés sur la partie de fermeture (7) pour enlever la capsule (3) de la cavité (6) lors du déplacement de la partie de fermeture dans la direction d'ouverture (e).

25. Dispositif selon la revendication 24, **caractérisé en ce que** le moyen auxiliaire est un élément de préhension (85) avec une contre-dépouille (87), l'élément de préhension (85), lors du déplacement de la partie de fermeture (7) dans la direction de fermeture (e) pouvant surmonter un bord (86) d'une capsule (3) insérée dans la cavité et la contre-dépouille (87) pour l'opération d'éjection formant une butée pour le bord (86) de la capsule (3).

26. Dispositif selon la revendication 2 et l'une quelconque des revendications 3 à 25, **caractérisé en ce que** le support (10) peut être constitué de deux moitiés de support (58, 59) dont le plan de séparation s'étend perpendiculairement à l'axe de pivotement du support de capsule (5) et où de préférence le plan de séparation s'étend en outre à travers l'axe longitudinal.
